(19) Europäisches Patentamt
European Patent Office
Office européen des brevets

(11) EP 4 159 932 B1

(12) # EUROPEAN PATENT SPECIFICATION

(45) Date of publication and mention of the grant of the patent:
**19.02.2025 Bulletin 2025/08**

(21) Application number: **21813056.5**

(22) Date of filing: **24.05.2021**

(51) International Patent Classification (IPC):
***E02F 9/20*** *(2006.01)* ***E02F 9/26*** *(2006.01)*
***G01G 19/08*** *(2006.01)*

(52) Cooperative Patent Classification (CPC):
**E02F 3/437; E02F 3/439; E02F 9/264; G01G 19/10;**
E02F 9/2282; E02F 9/2285; E02F 9/2292;
E02F 9/2296

(86) International application number:
**PCT/JP2021/019682**

(87) International publication number:
**WO 2021/241526 (02.12.2021 Gazette 2021/48)**

(54) **EXCAVATOR AND EXCAVATOR SYSTEM**

BAGGER UND BAGGERSYSTEM

EXCAVATRICE ET SYSTÈME D'EXCAVATRICE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.05.2020 JP 2020090916**

(43) Date of publication of application:
**05.04.2023 Bulletin 2023/14**

(73) Proprietor: **Sumitomo Construction Machinery Co., Ltd.**
**Tokyo 141-6025 (JP)**

(72) Inventor: **NISHI, Takashi**
**Chiba-shi, Chiba 263-0001 (JP)**

(74) Representative: **Louis Pöhlau Lohrentz**
**Patentanwälte**
**Postfach 30 55**
**90014 Nürnberg (DE)**

(56) References cited:
**WO-A1-2019/117166**
**WO-A1-2019/189013**
**WO-A1-2020/101006**
**WO-A1-2020/101006**
**DE-A1- 102020 206 368**
**JP-A- 2008 241 300**
**JP-A- 2016 089 559**
**JP-A- 2019 157 362**
**JP-A- 2020 020 155**
**JP-A- 2020 020 155**
**US-A1- 2008 162 004**
**US-A1- 2018 182 120**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 159 932 B1

## Description

[Technical Field]

The present invention relates to an excavator and a system for an excavator.

[Background Art]

There is a known device that adds up and displays the weight of soil loaded onto the loading platform of a dump truck by an excavator (see Patent Document 1).

This device detects the start and completion of loading work based on whether a combination of the boom raising and turning operation and a soil discharging operation is being performed. Then, the integrated value of the multiple excavation weights calculated from the beginning to the completion of loading work of a particular dump truck is calculated as the loaded amount (accumulated weight), which is the amount of soil loaded onto the particular dump truck. A soil discharging operation is an operation involving a bucket opening operation.

Further procedures for the calculation of a loaded weight are known from Patent Documents 2 to 9.

[Citation List]

[Patent Document]

[Patent Document 1]
International Publication No. 2019/031551
[Patent Document 2]
United States Publication No. US 2008/162004 A1
[Patent Document 3]
Japanese Patent Document No. JP 2019 157362 A
[Patent Document 4]
Japanese Patent Document No. JP 2020 020155 A
[Patent Document 5]
International Publication No. WO 2019/189013 A1
[Patent Document 6]
International Publication No. WO 2020/101006 A1
[Patent Document 7]
Japanese Patent Document No.JP 2016 089559 A
[Patent Document 8]
Japanese Patent Document No. JP 2008 241300 A
[Patent Document 9]
International Publication No. WO 2019/117166

[Summary of Invention]

[Technical Problem]

However, if whether soil has been discharged to the loading platform of the dump truck is determined based on whether the bucket opening operation has been performed, the loaded amount may not be accurately calculated. This is because the excavation weight calculated during setup work would also be added to the loaded amount. The setup work is preparatory work for the loading work and includes, for example, the work of gathering soil to be loaded so that the loading work can be carried out efficiently.

Accordingly, it is desirable to provide an excavator that more accurately calculates the loaded amount, which is the amount of load such as soil loaded on a transport vehicle such as a dump truck.

[Solution to Problem]

According to the present invention, there is provided an excavator according to claim 1 and a control device for an excavator according to claim 10.

According to an embodiment of the invention, the excavator can more accurately calculate the load amount loaded on a transport vehicle.

[Brief Description of Drawings]

FIG. 1 is a side view of an excavator according to the present embodiment;
FIG. 2 is a diagram schematically illustrating an example of the configuration of an excavator according to the present embodiment;
FIG. 3 is a diagram schematically illustrating an example of the configuration of a hydraulic system of an excavator according to the present embodiment;
FIG. 4A illustrates an example of a pilot circuit in which pilot pressure is applied to a control valve that hydraulically controls a boom cylinder;
FIG. 4B illustrates an example of a pilot circuit in which pilot pressure is applied to a control valve that hydraulically controls a bucket cylinder;
FIG. 4C illustrates an example of a pilot circuit in which pilot pressure is applied to a control valve that hydraulically controls a turning hydraulic motor;
FIG. 5 is a diagram schematically illustrating an example of the configuration portion of the excavator related to the soil weight detection function;
FIG. 6 illustrates an example of the configuration of a main screen;
FIG. 7A is a schematic diagram illustrating the parameters for the calculation of soil weight;
FIG. 7B is a schematic diagram illustrating the parameters for the calculation of soil weight;
FIG. 8 illustrates an example of a work site; and
FIG. 9 illustrates an example of a work site.

[Description of Embodiments]

An embodiment for carrying out the present invention is described below with reference to the drawings.

[Excavator overview]

First, an outline of an excavator 100 according to the present embodiment will be described with reference to FIG. 1.

FIG. 1 is a side view of the excavator 100 as an excavator according to the present embodiment.

In FIG. 1, the excavator 100 is located on a horizontal plane facing an uphill tilted surface ES that is a work object, and an uphill slope BS that is an example of a target work surface described later (that is, a slope shape after work on the uphill tilted surface ES) is also illustrated. A cylinder (not illustrated) is provided on the uphill tilted surface ES that is the work object, to indicate the normal direction of the uphill slope BS that is the target work surface.

The excavator 100 according to the present embodiment is provided with a lower traveling body 1, an upper turning body 3 mounted on the lower traveling body 1 so as to be able to turn freely via a turning mechanism 2, a boom 4, an arm 5, a bucket 6 configuring an attachment (work machine), and a cabin 10.

In the lower traveling body 1, a pair of left and right crawlers are respectively hydraulically driven by traveling hydraulic motors 1L and 1R (see FIG. 2 to be described later) to cause the excavator 100 to travel. That is, a pair of the traveling hydraulic motors 1L and 1R (an example of a traveling motor) drives the lower traveling body 1 (crawler) as a driven part.

The upper turning body 3 turns with respect to the lower traveling body 1 by being driven by a turning hydraulic motor 2A (see FIG. 2 described below). That is, the turning hydraulic motor 2A is a turning driving part that drives the upper turning body 3 as a driven part and can change the orientation of the upper turning body 3.

The upper turning body 3 may be electrically driven by an electric motor (hereafter, "turning electric motor") instead of the turning hydraulic motor 2A. That is, the turning electric motor, similar to the turning hydraulic motor 2A, is a turning driving part that drives the upper turning body 3 as a driven part and can change the orientation of the upper turning body 3.

The boom 4 is pivotally mounted to the center of the front of the upper turning body 3, the arm 5 is mounted to the leading end of the boom 4 so as to turn upward and downward, and the bucket 6 as an end attachment is mounted to the leading end of the arm 5 so as to turn upward and downward. The boom 4, the arm 5, and the bucket 6 are hydraulically driven by a boom cylinder 7, an arm cylinder 8, and a bucket cylinder 9 as hydraulic actuators, which are examples of actuators, respectively.

The bucket 6 is an example of an end attachment, and other end attachments, such as a slope bucket, a dredger bucket, a breaker, etc., may be attached to the leading end of the arm 5 instead of the bucket 6, depending on the work content, etc.

The cabin 10 is the driver's cabin where the operator is seated, and the cabin 10 is mounted on the front left side of the upper turning body 3.

[Excavator configuration]

Next, referring to FIG. 2 in addition to FIG. 1, the specific configuration of the excavator 100 according to the present embodiment will be described.

FIG. 2 is a diagram schematically illustrating an example of the configuration of the excavator 100 according to the present embodiment.

In FIG. 2, the mechanical power system, the hydraulic oil line, the pilot line, and the electrical control system are illustrated by a double line, a solid line, a dashed line, and a dotted line, respectively.

The driving system of the excavator 100 according to the present embodiment includes an engine 11, a regulator 13, a main pump 14, and a control valve 17. The hydraulic driving system of the excavator 100 according to the present embodiment includes hydraulic actuators such as the traveling hydraulic motors 1L and 1R, the turning hydraulic motor 2A, the boom cylinder 7, the arm cylinder 8, and the bucket cylinder 9 for hydraulically driving the lower traveling body 1, the upper turning body 3, the boom 4, the arm 5, the bucket 6, as described above.

The engine 11 is the main power source in the hydraulic driving system and is mounted, for example, at the rear of the upper turning body 3. Specifically, the engine 11 constantly rotates at a preset target rotation speed under direct or indirect control by a controller 30 described later to drive the main pump 14 and the pilot pump 15. The engine 11 is, for example, a diesel engine fueled with diesel oil.

The regulator 13 controls the discharge amount of the main pump 14. For example, the regulator 13 adjusts the angle (tilt angle) of the swash plate of the main pump 14 in response to a control command from the controller 30. The regulator 13 includes, for example, regulators 13L and 13R as described below.

The main pump 14, for example, similar to the engine 11, is mounted on the rear of the upper turning body 3 and supplies hydraulic oil to the control valve 17 through a high-pressure hydraulic line. The main pump 14 is driven by the engine 11 as described above. The main pump 14 is, for example, a variable capacity hydraulic pump, and as described above, under the control of the controller 30, the stroke length of the piston is adjusted by adjusting the tilt angle of the swash plate by the regulator 13, and the discharge flow rate (discharge pressure) is controlled. The main pump 14 includes, for example, main pumps 14L and 14R as described below.

The control valve 17 is, for example, a hydraulic control device mounted at the center of the upper turning body 3, and controls the hydraulic driving system in response to the operator's operation with respect to an operation device 26. The control valve 17 is connected to the main pump 14 via a high-pressure hydraulic line as described above and selectively supplies hydraulic oil supplied from the main pump 14 to the hydraulic actuator (the traveling hydraulic motors 1L and 1R, the turning hydraulic motor 2A, the boom cylinder 7, the arm cylinder 8, and the bucket cylinder 9) according to the operation state of the operation device 26. Specifically, the control valve 17 includes control valves 171 to 176 that control the flow rate and flow direction of hydraulic oil supplied from the main pump 14 to each of the hydraulic actuators. More specifically, the control valve 171 corresponds to the traveling hydraulic motor 1L, the control valve 172 corresponds to the traveling hydraulic motor 1R, and the control valve 173 corresponds to the turning hydraulic motor 2A. The control valve 174 corresponds to the bucket cylinder 9, the control valve 175 corresponds to the boom cylinder 7, and the control valve 176 corresponds to the arm cylinder 8. Further, the control valve 175 includes, for example, control valves 175L and 175R as described below, and the control valve 176 includes, for example, control valves 176L and 176R as described below. Details of the control valves 171 to 176 will be described later.

The operating system of the excavator 100 according to the present embodiment includes the pilot pump 15 and the operation device 26. The operating system of the excavator 100 includes a shuttle valve 32 as a configuration related to the machine control function by the controller 30 described later.

The pilot pump 15 is mounted, for example, at the rear of the upper turning body 3 and supplies pilot pressure to the operation device 26 via the pilot line. The pilot pump 15 is, for example, a fixed capacitive hydraulic pump and is driven by the engine 11 as described above.

The operation device 26 is provided near the operator's seat of the cabin 10 and is an operation input means for the operator to operate various moving elements (the lower traveling body 1, the upper turning body 3, the boom 4, the arm 5, the bucket 6, etc.). That is, the operation device 26 is an operation input means for the operator to operate the actuators (the hydraulic actuators (that is, the traveling hydraulic motor 1L and 1R, the turning hydraulic motor 2A, the boom cylinder 7, the arm cylinder 8, the bucket cylinder 9, etc.)) that drive the respective moving elements. In the present embodiment, the operation device 26 is connected to the control valve 17, directly through the pilot line on the secondary side thereof, or indirectly through the shuttle valve 32 described below provided on the pilot line on the secondary side thereof. Thus, the pilot pressure corresponding to the operation states of the lower traveling body 1, the upper turning body 3, the boom 4, the arm 5, and the bucket 6 in the operation device 26, can be input to the control valve 17. Therefore, the control valve 17 can drive each hydraulic actuator according to the operation state in the operation device 26. The operation device 26 includes, for example, a lever device for operating the arm 5 (the arm cylinder 8). Further, the operation device 26 includes, for example, lever devices 26A to 26C for operating each of the boom 4 (the boom cylinder 7), the bucket 6 (the bucket cylinder 9), and the upper turning body 3 (the turning hydraulic motor 2A) (see FIGS. 4A to 4C). Further, the operation device 26 includes, for example, a lever device and a pedal device for operating each of a pair of left and right crawlers (the traveling hydraulic motors 1L and 1R) of the lower traveling body 1. The actuator may be an electric actuator.

The shuttle valve 32 has two inlet ports and one outlet port, and outputs to the outlet port the hydraulic oil having the higher pilot pressure of the pilot pressure input to the two inlet ports. In the shuttle valve 32, one of the two inlet ports is connected to the operation device 26 and the other is connected to a proportional valve 31. The outlet port of the shuttle valve 32 is connected through a pilot line to the pilot port of the corresponding control valve in the control valve 17 (see FIGS. 4A to 4C for details). Therefore, the shuttle valve 32 can apply the higher one of the pilot pressure generated by the operation device 26 and the pilot pressure generated by the proportional valve 31 to the pilot port of the corresponding control valve. That is, the controller 30, described later, can control the corresponding control valve and control the motion of various moving elements without depending on the operation of the operation device 26 by the operator, by making the proportional valve 31 output pilot pressure higher than the pilot pressure of the secondary side output from the operation device 26. The shuttle valve 32 includes, for example, shuttle valves 32AL, 32AR, 32BL, 32BR, 32CL, and 32CR as described below.

The operation device 26 (left operation lever, right operation lever, left traveling lever, and right traveling lever) may be an electric type that outputs an electric signal instead of a hydraulic pilot type that outputs pilot pressure. In this case, the electric signal from the operation device 26 is input to the controller 30, and the controller 30 controls each of the control valves 171 to 176 in the control valve 17 according to the input electric signal, thereby implementing the motion of various hydraulic actuators according to the contents of the operation to the operation device 26. For example, the control valves 171 to 176 in the control valve 17 may be an electromagnetic solenoid spool valve driven by a command from the controller 30. For example, a solenoid valve that moves in response to an electrical signal from the controller 30 may be arranged between the pilot pump 15 and the pilot port of each of the control valves 171 to 176. In this case, when a manual operation using the electric operation device 26 is performed, the controller 30 can operate each of the control valves 171 to 176 according to the contents of operation with respect to the operation device 26 by controlling the solenoid valve and increasing or decreasing the pilot pressure according to the electric signal corresponding to the amount of operation (control input) (for example, the amount of lever operation).

When an electric operation device 26 is used, the controller 30 can drive the actuator by transmitting the amount of operation of the operation device 26 input by the operator to the proportional valve 31 as an electric signal. For this reason, a proportional valve 33 can be omitted when the electric operation device 26 is used. Further, the operation device 26 is not necessarily located in the cabin 10. The operation device 26 may be located in a remote control room installed outside the excavator 100. Furthermore, the operation device 26 may be implemented by a portable terminal carried by an operator around the excavator 100. In this way, even when the operation device 26 is installed outside the excavator 100, the controller 30 can drive the actuator by receiving the amount of operation of the operation device 26 input by the operator as an electrical signal through a communication device and then transmitting the operation amount to the proportional valve 31. For this reason, even when the operation device 26 is provided outside the excavator 100, the proportional valve 33 can be omitted. Further, the controller 30 can drive the actuator by transmitting to the proportional valve 31 an electric signal generated based on a preset moving pattern or target trajectory, etc., rather than the amount of operation of the operation device 26 input by the operator. That is, even in the case of an autonomously controlled excavator driven by each actuator based on a moving pattern or target trajectory, etc., the controller 30 can drive the actuator by transmitting an electric signal generated based on a moving pattern or target trajectory, etc., to the proportional valve 31.

The control system of the excavator 100 according to the present embodiment includes the controller 30, a discharge pressure sensor 28, an operation pressure sensor 29, a proportional valve 31, a display device 40, an input device 42, an audio output device 43, a storage device 47, a boom angle sensor S1, an arm angle sensor S2, a bucket angle sensor S3, a machine body tilt sensor S4, a turning state sensor S5, an imaging device S6, a positioning device PS, and a communication device T1.

The controller 30 (an example of a control device) is provided in the cabin 10, for example, and controls the drive of the excavator 100. The controller 30 may have the function thereof implemented by any kind of hardware, software, or a combination thereof. For example, the controller 30 is mainly configured by a CPU (Central Processing Unit), a ROM (Read Only Memory), a RAM (Random Access Memory), a non-volatile auxiliary storage device, and a microcomputer including various input/output interfaces, etc. The controller 30 implements various functions by executing, on the CPU, various programs stored in, for example, the ROM or the nonvolatile auxiliary storage.

For example, the controller 30 sets a target rotation speed based on a work mode or the like that is set in advance by a predetermined operation of the operator or the like, and performs drive control to rotate the engine 11 at a constant speed.

For example, the controller 30 outputs a control command to the regulator 13 as needed to change the discharge amount of the main pump 14.

Further, for example, the controller 30 performs control regarding a machine guidance function that guides the manual operation of the excavator 100 through the operation device 26 by the operator. The controller 30 also performs control regarding, for example, a machine control function that automatically supports manual operation of the excavator 100 through the operation device 26 by the operator. That is, the controller 30 includes a machine guidance part 50 as a functional part relating to a machine guidance function and a machine control function. The controller 30 also includes a soil weight processing part 60 described later.

Some of the functions of the controller 30 may be implemented by other controllers (control devices). That is, the functions of the controller 30 may be implemented in a manner of being distributed among multiple controllers. For example, the machine guidance function and the machine control function may be implemented by an exclusive-use controller (control device).

The discharge pressure sensor 28 detects the discharge pressure of the main pump 14. The detection signal corresponding to the discharge pressure detected by the discharge pressure sensor 28 is taken into the controller 30. The discharge pressure sensor 28 includes, for example, discharge pressure sensors 28L and 28R as described later.

The operation pressure sensor 29 detects the pilot pressure on the secondary side of the operation device 26, as described above, i.e., the pilot pressure corresponding to the operation state (for example, operation contents such as the direction and amount of operation) for each moving element (that is, a hydraulic actuator) in the operation device 26. Detection signals of pilot pressure corresponding to operation states of the lower traveling body 1, the upper turning body 3, the boom 4, the arm 5, the bucket 6, etc., in the operation device 26, detected by the operation pressure sensor 29, are taken into the controller 30. The operation pressure sensor 29 includes, for example, operation pressure sensors 29A to 29C as described below.

Note that, in place of the operation pressure sensor 29, other sensors capable of detecting the operation state of each moving element in the operation device 26, such as an encoder or potentiometer capable of detecting the operation amount (tilt amount) and tilt direction of the lever devices 26A to 26C, etc., may be provided.

The proportional valve 31 is provided in the pilot line connecting the pilot pump 15 and the shuttle valve 32 and is configured such that the flow path area thereof (the cross-sectional area through which hydraulic oil can flow) can be changed. The proportional valve 31 operates in response to a control command input from the controller 30. Thus, the controller 30 can supply hydraulic oil discharged from the pilot pump 15 to the pilot port of the corresponding control valve in the control valve 17 through the proportional valve 31 and the shuttle valve 32 even when the operation device 26 (specifically, the lever devices 26A to 26C) is not operated by the operator. The proportional valve 31 includes, for example, proportional valves 31AL, 31AR, 31BL, 31BR, 31CL, and 31CR, as described below.

The display device 40 is provided at a place in the cabin 10 where the display device 40 is easily visible from a seated operator and displays various information images under the control of the controller 30. The display device 40 may be connected to the controller 30 via an in-vehicle communication network such as CAN (Controller Area Network) or may be connected to the controller 30 via a one-to-one exclusive use line.

The input device 42 is provided within reach of the seated operator in the cabin 10, receives various operation inputs by the operator, and outputs signals corresponding to the operation inputs to the controller 30. The input device 42 includes a touch panel mounted on the display of the display device for displaying various information images, a knob switch provided at the tip of the lever part of the lever devices 26A to 26C, a button switch installed around the display device 40, a lever, a toggle, a rotary dial, etc. Signals corresponding to the contents of the operation to the input device 42 are taken into the controller 30.

The audio output device 43 is provided in the cabin 10, for example, and is connected to the controller 30 to output audio under control by the controller 30. The audio output device 43 is, for example, a speaker or a buzzer. The audio output device 43 outputs various kinds of information in response to an audio output command from the controller 30.

The storage device 47 is provided in the cabin 10, for example, and stores various kinds of information under the control of the controller 30. The storage device 47 is, for example, a non-volatile storage medium such as a semiconductor memory. The storage device 47 may store information output by various devices during the operation of the excavator 100, or may store information acquired via various devices before the operation of the excavator 100 is started. The storage device 47 may, for example, store data relating to the target work surface acquired via the communication device T1, etc., or set via the input device 42, etc. The target work surface may be set (saved) by the operator of the excavator 100 or by a construction manager or the like.

The boom angle sensor S1 is attached to the boom 4 and detects the pivot angle of the boom 4 with respect to the upper turning body 3 (hereinafter, "boom angle"), for example, the angle formed by a straight line connecting the fulcrums at both ends of the boom 4 and the turning plane of the upper turning body 3 in a side view. The boom angle sensor S1 may include, for example, a rotary encoder, an acceleration sensor, a six-axis sensor, an IMU (inertial measurement unit), etc. The boom angle sensor S1 may also include a potentiometer utilizing a variable resistor, a cylinder sensor for detecting the stroke amount of a hydraulic cylinder (the boom cylinder 7) corresponding to the boom angle, etc. The same applies to the arm angle sensor S2 and the bucket angle sensor S3. The detection signal corresponding to the boom angle detected by the boom angle sensor S1 is taken into the controller 30.

The arm angle sensor S2 is attached to the arm 5 and detects the rotation angle of the arm 5 with respect to the boom 4 (hereinafter, "arm angle"), for example, the angle formed by a straight line connecting the fulcrums at both ends of the arm 5 and a straight line connecting the fulcrums at both ends of the boom 4 in the side view. The detection signal corresponding to the arm angle detected by the arm angle sensor S2 is taken into the controller 30.

The bucket angle sensor S3 is attached to the bucket 6 and detects the rotation angle of the bucket 6 with respect to the arm 5 (hereinafter, "bucket angle"), for example, the angle formed by a straight line connecting the fulcrum and the tip (cutting edge) of the bucket 6 and a straight line connecting the fulcrums at both ends of the arm 5 in the side view. The detection signal corresponding to the bucket angle detected by the bucket angle sensor S3 is taken into the controller 30.

The machine body tilt sensor S4 detects the tilt state of the machine body (the upper turning body 3 or the lower traveling body 1) relative to the horizontal plane. The machine body tilt sensor S4 is attached to the upper turning body 3, for example, and detects the tilt angle (hereafter, "front-rear tilt angle" and "left-right tilt angle") about two axes in the front-rear direction and the left-right direction of the excavator 100 (that is, the upper turning body 3). The machine body tilt sensor S4 may include, for example, a rotary encoder, an acceleration sensor, a six-axis sensor, an IMU, etc. Detection signals corresponding to the tilt angles (front-rear tilt angle and left-right tilt angle) detected by the machine body tilt sensor S4 are taken into the controller 30.

The turning state sensor S5 outputs detection information about the turning state of the upper turning body 3. The turning state sensor S5 detects, for example, the turning angular velocity and turning angle of the upper turning body 3. The turning state sensor S5 may include, for example, a gyro sensor, a resolver, a rotary encoder, etc. Detection signals corresponding to the turning angle and turning angular velocity of the upper turning body 3 detected by the turning state sensor S5 are taken into the controller 30.

The imaging device S6 as a space recognition device captures images of the surroundings of the excavator 100. The imaging device S6 includes a camera S6F for imaging the area in front of the excavator 100, a camera S6L for imaging the area on the left side of the excavator 100, a camera S6R for imaging the area on the right side of the excavator 100, and a camera S6B for imaging the area behind the excavator 100. The imaging device S6 may include an attachment camera attached to the attachment.

The camera S6F is mounted, for example, on the ceiling of the cabin 10, i.e., inside the cabin 10. The camera S6F may be mounted on the exterior of the cabin 10, such as on the roof of the cabin 10 or on the side surface of the boom 4. The camera S6L is mounted on the upper left edge of the upper turning body 3, the camera S6R is mounted on the upper right edge of the upper turning body 3, and the camera S6B is mounted on the upper rear edge of the upper turning body 3.

The imaging device S6 (the cameras S6F, S6B, S6L, and S6R) is, for example, a monocular wide-angle camera with a very wide angle of view. The imaging device S6 may be a stereo camera, a distance imaging camera, or the like. The image captured by the imaging device S6 is taken into the controller 30 via the display device 40.

The imaging device S6 as a space recognition device may function as an object detection device. In this case, the imaging device S6 may detect objects present around the excavator 100. Objects to be detected may include, for example, people, animals, vehicles, construction machinery, structures, holes, or the like. The imaging device S6 may also calculate the distance from the imaging device S6 or the excavator 100 to the recognized object. The imaging device S6 as an object detection device may include, for example, a stereo camera, a distance image sensor, or the like. The space recognition device is, for example, a monocular camera with an imaging device such as a CCD or CMOS, and outputs the captured image to the display device 40. Further, the space recognition device may be configured to calculate the distance from the space recognition device or the excavator 100 to the recognized object. In addition to the imaging device S6, other object detection devices such as, for example, an ultrasonic sensor, a millimeter-wave radar, a LIDAR, an infrared sensor, or the like, may be provided as the space recognition device. When a millimeter-wave radar, an ultrasonic sensor, a laser radar or the like is used as a space recognition device, the distance and direction of the object may be detected from a reflected signal, by transmitting a large number of signals (laser light or the like) to the object and receiving the reflected signal. When an object detection device is provided, the imaging device S6 may be omitted.

Then, if a person is detected by the space recognition device within a predetermined distance from the excavator 100 before the actuator operates, the controller 30 may cause the actuator to be in an inoperative state or a low-speed state so that the excavator 100 does not move excessively when the operator operates the operation device 26. Specifically, if a person is detected within a predetermined distance from the excavator 100, the controller 30 can disable the operation of the actuator by locking the gate lock valve. In the case of the electric operation device 26, the controller 30 can disable the operation of the actuator by disabling a signal sent from the controller 30 to an operation control valve (the proportional valve 31). The same applies when the operation device 26 of another system is used (for example, when using an operation control valve that outputs a pilot pressure corresponding to a control command from the controller 30 and applies that pilot pressure to the pilot port of the corresponding control valve in the control valve 17). When the actuator is to be brought into a low-speed state, the controller 30 can bring the actuator into a low-speed state by reducing the output of the signal (for example, current signals) sent from the controller 30 to the operation control valve. Thus, when an object is detected within a predetermined distance, the actuator is not driven even when the operation device 26 is operated, or the actuator is driven at a low speed with an output smaller than the output of the signal when no object is detected within a predetermined distance. Furthermore, if a person is detected within a predetermined distance from the excavator when the operator operates the operation device 26, the controller 30 may stop or slow down the actuator regardless of the operator's operation. Specifically, when a person is detected within a predetermined distance from the excavator 100, the controller 30 stops the actuator by locking the gate lock valve. When using an operation control valve that outputs a pilot pressure corresponding to a control command from the controller 30 and applies the pilot pressure to the pilot port of the corresponding control valve in the control valve 17, the controller 30 can put the actuator into an inoperative state or a low-speed state by disabling the signal sent from the controller 30 to the operation control valve or by outputting a deceleration command. Further, when the detected object is a truck, stop control may be omitted. In this case, the actuator may be controlled to avoid the detected truck. In this way, the actuator may be controlled based on the type of the object detected.

The imaging device S6 may be directly connected to the controller 30 in a communicable manner. Further, the space recognition device may be located outside the excavator 100. In this case, the controller 30 may acquire information output by the space recognition device via the communication device T1. Specifically, the space recognition device may be mounted on an aerial photographing multicopter, a steel tower installed at a work site, a dump truck DT, or the like. The controller 30 may then determine the state of the spilled soil or the like based on an image viewed from any position around the excavator 100.

A boom rod pressure sensor S7R and a boom bottom pressure sensor S7B are mounted on the boom cylinder 7. An arm rod pressure sensor S8R and an arm bottom pressure sensor S8B are mounted on the arm cylinder 8. A bucket rod pressure sensor S9R and a bucket bottom pressure sensor S9B are mounted to the bucket cylinder 9. The boom rod pressure sensor S7R, the boom bottom pressure sensor S7B, the arm rod pressure sensor S8R, the arm bottom pressure sensor S8B, the bucket rod pressure sensor S9R, and the bucket bottom pressure sensor S9B are also collectively referred to as "cylinder pressure sensors".

The boom rod pressure sensor S7R detects the pressure in the rod-side oil chamber of the boom cylinder 7 (hereinafter, "boom rod pressure"), and the boom bottom pressure sensor S7B detects the pressure in the bottom-side oil chamber of the boom cylinder 7 (hereinafter, "boom bottom pressure"). The arm rod pressure sensor S8R detects the pressure in the rod-side oil chamber of the arm cylinder 8 (hereinafter, "arm rod pressure"), and the arm bottom pressure sensor S8B detects the pressure in the bottom-side oil chamber of the arm cylinder 8 (hereinafter, "arm bottom pressure"). The bucket rod pressure sensor S9R detects the pressure in the rod-side oil chamber of the bucket cylinder 9 (hereinafter, "bucket rod pressure"), and the bucket bottom pressure sensor S9B detects the pressure in the bottom-side oil chamber of the bucket cylinder 9 (hereinafter, "bucket bottom pressure").

The positioning device PS measures the position and orientation of the upper turning body 3. The positioning device PS is, for example, a GNSS (Global Navigation Satellite System) compass, which detects the position and orientation of the upper turning body 3, and the detection signal corresponding to the position and orientation of the upper turning body 3 is taken into the controller 30. Further, the function of detecting the orientation of the upper turning body 3 among the functions of the positioning device PS may be replaced by an orientation sensor attached to the upper turning body 3.

The communication device T1 communicates with external equipment through a predetermined network including a mobile communication network terminated at a base station, a satellite communication network, an Internet network, etc. The communication device T1 is, for example, a mobile communication module corresponding to mobile communication standards such as LTE (Long Term Evolution), 4G (4th Generation), 5G (5th Generation), or the like, or a satellite communication module for connecting to a satellite communication network.

The machine guidance part 50 performs, for example, control of the excavator 100 regarding the machine guidance function. The machine guidance part 50 transmits, to the operator through the display device 40, the audio output device 43, etc., work information such as, for example, the distance between the target work surface and the tip of the attachment, specifically, the working part of the end attachment. The data on the target work surface is stored in advance in the storage device 47, for example, as described above. Data on the target work surface is expressed, for example, in a reference coordinate system. A reference coordinate system is, for example, the World Geodetic System. The World Geodetic System is a three-dimensional orthogonal XYZ coordinate system with the origin at the Earth's center of gravity, the X axis in the direction of the intersection of the Greenwich meridian and the equator, the Y axis in the direction of longitude 90 degrees east, and the Z axis in the direction of the North Pole. The operator may define any point at the work site as the reference point and, through the input device 42, set the target work surface according to the relative positional relationship with the reference point. The working part of the bucket 6 is, for example, the claw tip of the bucket 6, the back surface of the bucket 6, etc. Further, when a breaker is adopted as the end attachment instead of the bucket 6, for example, the tip of the breaker corresponds to the working part. The machine guidance part 50 notifies the operator of the work information through the display device 40, the audio output device 43, etc., and guides the operator's operation of the excavator 100 through the operation device 26.

Further, the machine guidance part 50 performs control of the excavator 100 regarding, for example, the machine control function. The machine guidance part 50 may automatically operate at least one of the boom 4, the arm 5, and the bucket 6 so that the target work surface coincides with the tip position of the bucket 6, for example, when the operator performs a manual excavation operation.

The machine guidance part 50 acquires information from the boom angle sensor S1, the arm angle sensor S2, the bucket angle sensor S3, the machine body tilt sensor S4, the turning state sensor S5, the imaging device S6, the positioning device PS, the communication device T1, the input device 42, etc. Then, the machine guidance part 50 calculates, for example, the distance between the bucket 6 and the target work surface based on the acquired information, notifies the operator of the magnitude of the distance between the bucket 6 and the target work surface by the sound from the audio output device 43 and an image displayed on the display device 40, and automatically controls the motion of the attachment so that the tip part of the attachment (specifically, the working part such as the claw tip or the back surface of the bucket 6) coincides with the target work surface. The machine guidance part 50 includes a position calculating part 51, a distance calculating part 52, an information transmitting part 53, an automatic control part 54, a turning angle calculating part 55, and a relative angle calculating part 56 as detailed functional configurations relating to the machine guidance function and the machine control function.

The position calculating part 51 calculates the position of a predetermined positioning target. For example, the position calculating part 51 calculates the coordinate points in the reference coordinate system of the tip of the attachment, specifically, the working part such as the claw tip or the back surface of the bucket 6. Specifically, the position calculating part 51 calculates the coordinate point of the working part of the bucket 6 from the pivot angle (the boom angle, the arm angle, and the bucket angle) of each of the boom 4, the arm 5 and the bucket 6.

The distance calculating part 52 calculates the distance between two positioning objects. For example, the distance calculating part 52 calculates the distance between the working part such as the tip of the attachment, specifically, the claw tip or the back surface of the bucket 6, and the target work surface. Further, the distance calculating part 52 may calculate the angle (relative angle) between the back surface of the bucket 6 as the working part and the target work surface.

The information transmitting part 53 transmits (reports) various kinds of information to the operator of the excavator 100 through a predetermined notification means such as the display device 40 or the audio output device 43. The information transmitting part 53 notifies the operator of the excavator 100 of the magnitudes (degrees) of various distances calculated by the distance calculating part 52. For example, the distance (magnitude) between the tip of the bucket 6 and the target work surface is communicated to the operator by using at least one of the visual information displayed by the display device 40 and the auditory information output by the audio output device 43. Further, the information transmitting part 53 may use at least one of the visual information provided by the display device 40 and the auditory information provided by the audio output device 43 to communicate to the operator the relative angle (magnitude) between the back surface of the bucket 6 as a working part and the target work surface.

Specifically, the information transmitting part 53 transmits to the operator the magnitude of the distance (for example, the vertical distance) between the working part of the bucket 6 and the target work surface by using intermittent sound output by the audio output device 43. In this case, the information transmitting part 53 may shorten the interval between intermittent sounds as the vertical distance decreases, and may lengthen the interval between intermittent sounds as the vertical distance increases. Further, the information transmitting part 53 may use continuous sound and may express the difference in the magnitude of the vertical distance by changing the pitch, the strength, etc., of the sound. Further, when the tip of the bucket 6 becomes lower than the target work surface, that is, when the tip of the bucket 6 exceeds the target work surface, the information transmitting part 53 may issue an alarm through the audio output device 43. The alarm is, for example, a continuous sound that is significantly louder than the intermittent sound.

Further, the information transmitting part 53 may cause the display device 40 to display the tip of the attachment, specifically, the magnitude of the distance between the working part of the bucket 6 and the target work surface, the magnitude of the relative angle between the back surface of the bucket 6 and the target work surface, etc., as work information. Under the control of the controller 30, the display device 40 displays, for example, the work information received from the information transmitting part 53 together with the image data received from the imaging device S6. The information transmitting part 53 may transmit the magnitude of the vertical distance to the operator by using, for example, an image of an analog meter or an image of a graph indicator.

The automatic control part 54 automatically supports the manual operation of the excavator 100 through the operation device 26 by the operator by automatically operating the actuator. Specifically, the automatic control part 54 can individually and automatically adjust the pilot pressure acting on the control valve (specifically, the control valve 173, the control valves 175L and 175R, and the control valve 174) corresponding to the multiple hydraulic actuators (specifically, the turning hydraulic motor 2A, the boom cylinder 7, and the bucket cylinder 9), as described below. Thus, the automatic control part 54 can automatically operate each hydraulic actuator. The control regarding the machine control function by the automatic control part 54 may be executed, for example, when a predetermined switch included in the input device 42 is pressed. The predetermined switch is, for example, a machine control switch (MC (Machine Control) switch), which may be positioned as a knob switch at the tip of the operator's grip on the operation device 26 (for example, a lever device corresponding to the operation of the arm 5). The following explanation is based on the assumption that the machine control function is effective when the MC switch is pressed.

For example, when the MC switch or the like is pressed, the automatic control part 54 automatically extends or contracts at least one of the boom cylinder 7 and the bucket cylinder 9 in accordance with the operation of the arm cylinder 8 in order to support excavation work or shaping work. Specifically, when the operator manually performs the closing operation of the arm 5 (hereafter, "arm closing operation"), the automatic control part 54 automatically extends or contracts at least one of the boom cylinder 7 and the bucket cylinder 9 so that the target work surface coincides with the position of the working part such as the claw tip and the back surface of the bucket 6. In this case, the operator can close the arm 5 while aligning the claw tip or the like of the bucket 6 with the target work surface, for example, by simply performing the arm closing operation on the lever device corresponding to the operation of the arm 5.

Further, the automatic control part 54 may automatically rotate the turning hydraulic motor 2A (an example of an actuator) to cause the upper turning body 3 to front-face the target work surface when the MC switch or the like is pressed. Hereafter, the control by the controller 30 (the automatic control part 54) to cause the upper turning body 3 to front-face the target work surface is referred to as "front-facing control". Thus, the operator or the like can cause the upper turning body 3 to front-face the target work surface only by pressing a predetermined switch or by operating the lever device 26C described later corresponding to the turning operation while the switch is pressed. Further, the operator can cause the upper turning body 3 to front-face the target work surface and start the machine control function related to the excavation work or the like of the target work surface described above, by simply pressing the MC switch.

For example, when the upper turning body 3 of the excavator 100 is front-facing the target work surface, the tip of the attachment (for example, the claw tip or the back surface of the bucket 6 as a working part) can be moved along the tilt direction of the target work surface (the uphill slope BS) according to the motion of the attachment. Specifically, when the upper turning body 3 of the excavator 100 front-faces the target work surface, the operating surface of the attachment (attachment operating surface) perpendicular to the turning plane of the excavator 100 includes a normal line of the target work surface corresponding to the cylindrical body (that is, the state along the normal line).

If the attachment operating surface of the excavator 100 is not in a state that includes the normal line of the target work surface corresponding to the cylindrical body, the tip of the attachment cannot move the target work surface in a tilt direction. For this reason, as a result, the excavator 100 cannot properly form the target work surface. On the other hand, the automatic control part 54 can cause the upper turning body 3 to front-face the target work surface by automatically rotating the turning hydraulic motor 2A. Thus, the excavator 100 can properly form the target work surface.

In the front-facing control, for example, when the left edge vertical distance (hereinafter, simply referred to as "left edge vertical distance") between the coordinate point of the left edge of the claw tip of the bucket 6 and the target work surface is equal to the right edge vertical distance (hereinafter, simply referred to as "right edge vertical distance") between the coordinate point of the right edge of the claw tip of the bucket 6 and the target work surface, the automatic control part 54 determines that the excavator is front-facing the target work surface. Further, the automatic control part 54 may determine that the excavator 100 is front-facing the target work surface when the difference between the left edge vertical distance and the right edge vertical distance becomes less than or equal to a predetermined value, not when the left edge vertical distance and the right edge vertical distance become equal (that is, when the difference between the left edge vertical distance and the right edge vertical distance becomes zero).

Further, the automatic control part 54 may operate the turning hydraulic motor 2A based on the difference between the left edge vertical distance and the right edge vertical distance, for example, in the front-facing control. Specifically, when the lever device 26C corresponding to a turning operation is operated with a predetermined switch such as an MC switch pressed down, it is determined whether the lever device 26C has been operated in a direction that causes the upper turning body 3 to front-face the target work surface. For example, if the lever device 26C is operated in a direction in which the vertical distance between the claw tip of the bucket 6 and the target work surface (the uphill slope BS) increases, the automatic control part 54 does not perform front-facing control. On the other hand, when the turning operation lever is operated in a direction in which the vertical distance between the claw tip of the bucket 6 and the target work surface (the uphill slope BS) decreases, the automatic control part 54 performs front-facing control. As a result, the automatic control part 54 can operate the turning hydraulic motor 2A so that the difference between the left edge vertical distance and the right edge vertical distance is reduced. Then, when the difference becomes less than or equal to a predetermined value or becomes zero, the automatic control part 54 stops the turning hydraulic motor 2A. The automatic control part 54 may also set a turning angle at which the difference is less than or equal to a predetermined value or zero as a target angle, and control the operation of the turning hydraulic motor 2A so that the angle difference between the target angle and the current turning angle (specifically, the detection value based on the detection signal of the turning state sensor S5) becomes zero. In this case, the turning angle is, for example, the angle of the front-rear axis of the upper turning body 3 with respect to a reference direction.

When a turning electric motor is mounted on the excavator 100 instead of the turning hydraulic motor 2A as described above, the automatic control part 54 performs the front-facing control with the turning electric motor (an example of an actuator) as the control target.

The turning angle calculating part 55 calculates the turning angle of the upper turning body 3. With this, the controller 30 can identify the current orientation of the upper turning body 3. The turning angle calculating part 55 calculates, for example, the angle of the front-rear axis of the upper turning body 3 with respect to the reference direction as the turning angle based on the output signal of the GNSS compass included in the positioning device PS. The turning angle calculating part 55 may calculate the turning angle based on the detection signal of the turning state sensor S5. Further, when a reference point is set at the work site, the turning angle calculating part 55 may use the direction in which the reference point is viewed from the turning axis as the reference direction.

The turning angle indicates the direction in which the attachment operating surface extends relative to the reference direction. The attachment operating surface is, for example, a virtual plane that traverses the attachment and is positioned perpendicular to the turning plane. The turning plane is, for example, a virtual plane including the bottom surface of the turning frame perpendicular to the turning axis. For example, when the controller 30 (the machine guidance part 50) determines that the attachment operating surface includes the normal line of the target work surface, the controller 30 determines that the upper turning body 3 is front-facing the target work surface.

The relative angle calculating part 56 calculates a turning angle (relative angle) necessary to cause the upper turning body 3 to front-face the target work surface. The relative angle is, for example, the relative angle formed between the direction of the front-rear axis of the upper turning body 3 when the upper turning body 3 is caused to front-face the target work surface and the current direction of the front-rear axis of the upper turning body 3. The relative angle calculating part 56 calculates the relative angle based on, for example, data about the target work surface stored in the storage device 47 and the turning angle calculated by the turning angle calculating part 55.

When the lever device 26C corresponding to a turning operation is operated with a predetermined switch such as an MC switch pressed down, the automatic control part 54 determines whether the turning operation is performed in the direction of causing the upper turning body 3 to front-face the target work surface. When the automatic control part 54 determines that the upper turning body 3 has been turned in a direction to front-face the target work surface, the automatic control part 54 sets the relative angle calculated by the relative angle calculating part 56 as the target angle. Then, when the change in the turning angle after the lever device 26C is operated reaches the target angle, the automatic control part 54 determines that the upper turning body 3 front-faces the target work surface, and the motion of the turning hydraulic motor 2A may be stopped. Thus, the automatic control part 54 can cause the upper turning body 3 to front-face the target work surface, based on the premise of the configuration illustrated in FIG. 2. In the above example of front-facing control, an example of front-facing control with respect to the target work surface is described, but the control is not limited thereto. For example, even in the scooping action of loading the temporarily placed soil into a dump truck, a target track (target excavation track) corresponding to the target volume may be generated, and the front-facing control of the turning motion may be performed so that the attachment faces the target excavation track. In this case, the target excavation track is changed each time a scooping action is performed. Therefore, after the soil is discharged to the dump truck, front-facing control is performed with respect to the newly changed target excavation track.

The turning hydraulic motor 2A has a first port 2A1 and a second port 2A2. The hydraulic sensor 21 detects the pressure of the hydraulic oil in the first port 2A1 of the turning hydraulic motor 2A. A hydraulic sensor 22 detects the pressure of hydraulic oil in the second port 2A2 of the turning hydraulic motor 2A. The detection signal corresponding to the discharge pressure detected by the hydraulic sensors 21 and 22 is taken into the controller 30.

Further, the first port 2A1 is connected to the hydraulic oil tank via a relief valve 23. The relief valve 23 opens when the pressure on the side of the first port 2A1 reaches a predetermined relief pressure and discharges the hydraulic oil on the side of the first port 2A1 into the hydraulic oil tank. Similarly, the second port 2A2 is connected to the hydraulic oil tank via the relief valve 24. The relief valve 24 opens when the pressure on the second port 2A2 side reaches a predetermined relief pressure and discharges the hydraulic oil on the second port 2A2 side into the hydraulic oil tank.

[Excavator hydraulic system]

Next, the hydraulic system of the excavator 100 according to the present embodiment will be described with reference to FIG. 3.

FIG. 3 is a diagram schematically illustrating an example of the configuration of the hydraulic system of the excavator 100 according to the present embodiment.

In FIG. 3, the mechanical power system, the hydraulic oil line, the pilot line, and the electrical control system are illustrated by a double line, a solid line, a dashed line, and a dotted line, respectively, as in FIG. 2, etc.

The hydraulic system implemented by the hydraulic circuit circulates hydraulic oil from each of the main pumps 14L and 14R driven by the engine 11 to the hydraulic oil tank via the center bypass oil passages C1L and C1R and parallel oil passages C2L and C2R.

Starting from the main pump 14L, the center bypass oil passage C1L passes through the control valves 171, 173, 175L, and 176L arranged in the control valve 17 in the stated order to reach the hydraulic oil tank.

Starting from the main pump 14R, the center bypass oil passage C1R passes through the control valves 172, 174, 175R, and 176R arranged in the control valve 17 in the stated order to reach the hydraulic oil tank.

The control valve 171 is a spool valve that supplies the hydraulic oil discharged from the main pump 14L to the traveling hydraulic motor 1L and discharges the hydraulic oil discharged from the traveling hydraulic motor 1L to the hydraulic oil tank.

The control valve 172 is a spool valve that supplies hydraulic oil discharged from the main pump 14R to the traveling hydraulic motor 1R and discharges hydraulic oil discharged by the traveling hydraulic motor 1R to the hydraulic oil tank.

The control valve 173 is a spool valve that supplies the hydraulic oil discharged from the main pump 14L to the turning hydraulic motor 2A and discharges the hydraulic oil discharged by the turning hydraulic motor 2A to the hydraulic oil tank.

The control valve 174 is a spool valve that supplies the hydraulic oil discharged from the main pump 14R to the bucket cylinder 9 and discharges the hydraulic oil in the bucket cylinder 9 to the hydraulic oil tank.

The control valves 175L and 175R are spool valves for supplying hydraulic oil discharged by the main pumps 14L and 14R to the boom cylinder 7 and for discharging the hydraulic oil in the boom cylinder 7 to the hydraulic oil tank, respectively.

The control valves 176L and 176R supply hydraulic oil discharged by the main pumps 14L and 14R to the arm cylinder 8 and discharge the hydraulic oil in the arm cylinder 8 to the hydraulic oil tank.

The control valves 171, 172, 173, 174, 175L, 175R, 176L, and 176R adjust the flow rate of hydraulic oil supplied and discharged to the hydraulic actuator and switch the flow direction, respectively, according to the pilot pressure acting on the pilot port.

The parallel oil passage C2L supplies hydraulic oil of the main pump 14L to the control valves 171, 173, 175L, and 176L in parallel with the center bypass oil passage C1L. Specifically, the parallel oil passage C2L branches from the center bypass oil passage C1L at the upstream side of the control valve 171, and is configured to be able to supply hydraulic oil of the main pump 14L in parallel with each of the control valves 171, 173, 175L, and 176R. Thus, the parallel oil passage C2L can supply hydraulic oil to the control valve further downstream if the flow of hydraulic oil through the center bypass oil passage C1L is limited or interrupted by any of the control valves 171, 173, and 175L.

The parallel oil passage C2R supplies hydraulic oil of the main pump 14R to the control valves 172, 174, 175R, and 176R in parallel with the center bypass oil passage C1R. Specifically, the parallel oil passage C2R branches from the center bypass oil passage C1R at the upstream side of the control valve 172, and is configured to be able to supply the hydraulic oil of the main pump 14R in parallel with each of the control valves 172, 174, 175R, and 176R. The parallel oil passage C2R can supply hydraulic oil to a more downstream control valve if the flow of hydraulic oil through the center bypass oil passage C1R is limited or interrupted by any of the control valves 172, 174, and 175R.

The regulators 13L and 13R adjust the discharge of the main pumps 14L and 14R by adjusting the tilt angle of the swash plates of the main pumps 14L and 14R, respectively, under the control of the controller 30.

The discharge pressure sensor 28L detects the discharge pressure of the main pump 14L, and the detection signal corresponding to the detected discharge pressure is taken into the controller 30. The same applies to the discharge pressure sensor 28R. Thus, the controller 30 can control the regulators 13L and 13R according to the discharge pressure of the main pumps 14L and 14R.

In the center bypass oil passages C1L and C1R, throttles 18L and 18R are provided between each of the control valves 176L and 176R at the most downstream and the hydraulic oil tank. Thus, the flow of hydraulic oil discharged by the main pumps 14L and 14R is limited by the throttles 18L and 18R. The throttles 18L and 18R generate control pressure to control the regulators 13L and 13R.

The control pressure sensors 19L and 19R detect the control pressure, and the detection signal corresponding to the detected control pressure is taken into the controller 30.

The controller 30 may control the regulators 13L and 13R and adjust the discharge amounts of the main pumps 14L and 14R according to the discharge pressures of the main pumps 14L and 14R detected by the discharge pressure sensors 28L and 28R. For example, the controller 30 may reduce the discharge amount by controlling the regulator 13L and adjusting the swash plate tilt angle of the main pump 14L according to the increase in the discharge pressure of the main pump 14L. The same is true for the regulator 13R. Thus, the controller 30 can control the total horsepower of the main pumps 14L and 14R so that the absorbed horsepower of the main pumps 14L and 14R, expressed as the product of the discharge pressure and the discharge amount, does not exceed the output horsepower of the engine 11.

The controller 30 may also adjust the discharge amount of the main pumps 14L and 14R by controlling the regulators 13L and 13R according to the control pressure detected by the control pressure sensors 19L and 19R. For example, the controller 30 decreases the discharge amount of the main pumps 14L and 14R as the control pressure is larger, and increases the discharge amount of the main pumps 14L and 14R as the control pressure is smaller.

Specifically, in the standby state (illustrated in FIG. 3) in which none of the hydraulic actuators in the excavator 100 are operated, the hydraulic oil discharged from the main pumps 14L and 14R passes through the center bypass oil passages C1L and C1R to the throttles 18L and 18R. The flow of hydraulic oil discharged from the main pumps 14L and 14R increases the control pressure generated upstream of the throttles 18L and 18R. As a result, the controller 30 reduces the discharge amount of the main pumps 14L and 14R to the permissible minimum discharge amount, and reduces the pressure loss (pumping loss) when the discharged hydraulic oil passes through the center bypass oil passages C1L and C1R.

On the other hand, when any of the hydraulic actuators is operated through the operation device 26, hydraulic oil discharged from the main pumps 14L and 14R flows into the hydraulic actuator to be operated through the control valve corresponding to the hydraulic actuator to be operated. Then, the flow of hydraulic oil discharged from the main pumps 14L and 14R decreases or eliminates the amount reaching the throttles 18L and 18R and reduces the control pressure generated upstream of the throttles 18L and 18R. As a result, the controller 30 can increase the discharge amount of the main pumps 14L and 14R, circulate sufficient hydraulic oil to the hydraulic actuator to be operated, and reliably drive the hydraulic actuator to be operated.

[Configuration details of machine control function of excavator]

Next, with reference to FIGS. 4A to 4C, the details of the configuration relating to the machine control function of the excavator 100 will be described.

FIGS. 4A to 4C schematically illustrate one example of a configuration related to the operating system in the hydraulic system of the excavator 100 according to the present embodiment. Specifically, FIG. 4A illustrates an example of a pilot circuit in which pilot pressure is applied to control valves 175L and 175R for hydraulically controlling the boom cylinder 7. FIG. 4B illustrates an example of a pilot circuit in which pilot pressure is applied to the control valve 174 for hydraulically controlling the bucket cylinder 9. FIG. 4C illustrates an example of a pilot circuit in which pilot pressure is applied to a control valve 173 for hydraulically controlling the turning hydraulic motor 2A.

For example, as illustrated in FIG. 4A, the lever device 26A is used by an operator or the like to operate the boom cylinder 7 corresponding to the boom 4. The lever device 26A uses hydraulic oil discharged from the pilot pump 15 to output pilot pressure to the secondary side according to the operation.

In the shuttle valve 32AL, two inlet ports are connected, respectively, to the pilot line on the secondary side of the lever device 26A and the pilot line on the secondary side of the proportional valve 31AL, corresponding to a raising direction operation (hereafter, "boom raising operation") of the boom 4, and the outlet port is connected to the pilot port on the right side of the control valve 175L and the pilot port on the left side of the control valve 175R.

In the shuttle valve 32AR, two inlet ports are respectively connected to the pilot line on the secondary side of the lever device 26A and the pilot line on the secondary side of the proportional valve 31AR corresponding to the lowering direction operation of the boom 4 (hereafter, "boom lowering operation"), and an outlet port is connected to the pilot port on the right side of the control valve 175R.

That is, the lever device 26A applies pilot pressure corresponding to the operation content (for example, operating direction and operation amount) to the pilot ports of the control valves 175L and 175R via the shuttle valves 32AL and 32AR. Specifically, when a boom raising operation is performed, the lever device 26A outputs pilot pressure corresponding to the amount of operation to one inlet port of the shuttle valve 32AL, to act on the right pilot port of the control valve 175L and the left pilot port of the control valve 175R through the shuttle valve 32AL. Further, when a boom lowering operation is performed, the lever device 26A outputs pilot pressure corresponding to the amount of operation to one inlet port of the shuttle valve 32AR, to act on the pilot port on the right side of the control valve 175R through the shuttle valve 32AR.

The proportional valve 31AL operates according to the control current input from the controller 30. Specifically, the proportional valve 31AL uses hydraulic oil discharged from the pilot pump 15 to output pilot pressure corresponding to the control current input from the controller 30 to the other inlet port of the shuttle valve 32AL. Thus, the proportional valve 31AL can adjust the pilot pressure acting on the right pilot port of the control valve 175L and the left pilot port of the control valve 175R via the shuttle valve 32AL.

The proportional valve 31 AR operates in response to the control current input from the controller 30. Specifically, the proportional valve 31AR uses hydraulic oil discharged from the pilot pump 15 to output pilot pressure corresponding to the control current input from the controller 30 to the other inlet port of the shuttle valve 32AR. Thus, the proportional valve 31AR can adjust the pilot pressure acting on the pilot port on the right side of the control valve 175R via the shuttle valve 32AR.

That is, the proportional valves 31AL and 31AR can adjust the pilot pressure output to the secondary side so that the control valves 175L and 175R can be stopped at any valve position, regardless of the operation state of the lever device 26A.

The proportional valve 33AL, similar to the proportional valve 31AL, functions as a control valve for machine control. The proportional valve 33AL is arranged in the pipeline connecting the operation device 26 and the shuttle valve 32AL, and is configured so that the channel area of the pipeline can be changed. In the present embodiment, the proportional valve 33AL operates in response to a control command output by the controller 30. Therefore, the controller 30 can be supplied to the pilot port of the corresponding control valve in the control valve 17 through the shuttle valve 32AL after reducing the pressure of the hydraulic oil discharged by the operation device 26, regardless of the operation of the operation device 26 by the operator.

Similarly, the proportional valve 33AR functions as a control valve for machine control. The proportional valve 33AR is located in the pipeline connecting the operation device 26 and the shuttle valve 32AR, and is configured such that the channel area of the pipeline can be changed. In the present embodiment, the proportional valve 33AR operates in response to a control command output by the controller 30. Therefore, the controller 30 can supply hydraulic oil to the pilot port of the corresponding control valve in the control valve 17 through the shuttle valve 32AR after reducing the pressure of the hydraulic oil discharged by the operation device 26, regardless of the operation of the operation device 26 by the operator.

The operation pressure sensor 29A detects the operation content by the operator on the lever device 26A in the form of pressure (operation pressure), and a detection signal corresponding to the detected pressure is taken into the controller 30. Thus, the controller 30 can identify the contents of the operation for the lever device 26A.

The controller 30 can cause the hydraulic oil discharged from the pilot pump 15 to be supplied to the pilot port on the right side of the control valve 175L and the pilot port on the left side of the control valve 175R via the proportional valve 31AL and the shuttle valve 32AL, regardless of the operator’s boom raising operation on the lever device 26A. The controller 30 can also supply hydraulic oil discharged from the pilot pump 15 to the pilot port on the right side of the control valve 175R via the proportional valve 31AR and the shuttle valve 32AR, regardless of the boom lowering operation to the lever device 26A by the operator. That is, the controller 30 can automatically control the motion of raising and lowering the boom 4. Further, the controller 30 can forcibly stop the operation of the hydraulic actuator corresponding to the specific operation device 26 even when the operation to the specific operation device 26 is being performed.

The proportional valve 33AL operates in response to a control command (current command) output by the controller 30. Then, the pilot pressure according to the hydraulic oil introduced from the pilot pump 15 to the right pilot port of the control valve 175L and the left pilot port of the control valve 175R through the lever device 26A, the proportional valve 33AL, and the shuttle valve 32AL, is reduced. The proportional valve 33AR operates in response to a control command (current command) output by the controller 30. Then, the pilot pressure according to the hydraulic oil introduced from the pilot pump 15 to the right pilot port of the control valve 175R through the lever device 26A, the proportional valve 33AR, and the shuttle valve 32AR, is reduced. The proportional valves 33AL and 33AR can adjust the pilot pressure to stop the control valves 175L and 175R at any valve position.

With this configuration, the controller 30 can reduce the pilot pressure acting on the pilot port (the left pilot port of the control valve 175L and the right pilot port of the control valve 175R) on the raising side of the control valve 175 and forcibly stop the closing operation of the boom 4 as needed, even when the boom raising operation by the operator is being performed. The same applies to the case of forcibly stopping the lowering operation of the boom 4 even when the boom lowering operation by the operator is being performed.

Alternatively, the controller 30 may forcibly stop the raising operation of the boom 4 by controlling the proportional valve 31AR, increasing the pilot pressure acting on the lower pilot port of the control valve 175 (the right pilot port of the control valve 175R) opposite the upper pilot port of the control valve 175, and forcibly returning the control valve 175 to the neutral position, if necessary, even when the boom raising operation by the operator is being performed. In this case, the proportional valve 33AL may be omitted. The same applies to the case where the lowering operation of the boom 4 is forcibly stopped even when the boom lowering operation by the operator is performed. That is, the proportional valves 33AL and 33AR may be omitted.

As illustrated in FIG. 4B, the lever device 26B is used by an operator or the like to operate the bucket cylinder 9 corresponding to the bucket 6. The lever device 26B uses hydraulic oil discharged from the pilot pump 15 to output pilot pressure to the secondary side according to the operation.

In the shuttle valve 32BL, two inlet ports are respectively connected to the pilot line on the secondary side of the lever device 26B and the pilot line on the secondary side of the proportional valve 31BL, corresponding to the closing direction operation (hereinafter, "bucket closing operation") of the bucket 6, and the outlet port is connected to the pilot port on the left side of the control valve 174.

In the shuttle valve 32BR, two inlet ports are respectively connected to the pilot line on the secondary side of the lever device 26B and the pilot line on the secondary side of the proportional valve 31BR corresponding to the opening direction operation (hereafter, "bucket opening operation") of the bucket 6, and the outlet port is connected to the pilot port on the right side of the control valve 174.

That is, the lever device 26B applies pilot pressure corresponding to the operation content to the pilot port of the control valve 174 via the shuttle valves 32BL and 32BR. Specifically, when the bucket closing operation is performed, the lever device 26B outputs pilot pressure corresponding to the amount of operation to one inlet port of the shuttle valve 32BL, to act on the left pilot port of the control valve 174 through the shuttle valve 32BL. Further, when the bucket opening operation is performed, the lever device 26B outputs pilot pressure corresponding to the operation amount to one inlet port of the shuttle valve 32BR, to act on the pilot port on the right side of the control valve 174 through the shuttle valve 32BR.

The proportional valve 31BL operates according to the control current input from the controller 30. Specifically, the proportional valve 31BL uses hydraulic oil discharged from the pilot pump 15 to output pilot pressure corresponding to the control current input from the controller 30 to the other pilot port of the shuttle valve 32BL. Thus, the proportional valve 31BL can adjust the pilot pressure acting on the left pilot port of the control valve 174 via the shuttle valve 32BL.

The proportional valve 31BR operates according to the control current output by the controller 30. Specifically, the proportional valve 31BR uses hydraulic oil discharged from the pilot pump 15 to output pilot pressure corresponding to the control current input from the controller 30 to the other pilot port of the shuttle valve 32BR. Thus, the proportional valve 31BR can adjust the pilot pressure acting on the pilot port on the right side of the control valve 174 via the shuttle valve 32BR.

That is, the proportional valves 31BL and 31BR can adjust the pilot pressure output to the secondary side so that the control valve 174 can be stopped at any valve position, regardless of the operation state of the lever device 26B.

The proportional valve 33BL, similar to the proportional valve 31BL, functions as a control valve for machine control. The proportional valve 33BL is arranged in the pipeline connecting the operation device 26 and the shuttle valve 32BL, and is configured such that the channel area of the pipeline can be changed. In the present embodiment, the proportional valve 33BL operates in response to a control command output by the controller 30. Therefore, the controller 30 can supply hydraulic oil to the pilot port of the corresponding control valve in the control valve 17 through the shuttle valve 32 BL after reducing the pressure of the hydraulic oil discharged by the operation device 26, regardless of the operation of the operation device 26 by the operator.

Similarly, the proportional valve 33BR functions as a control valve for machine control. The proportional valve 33BR is arranged in the pipeline connecting the operation device 26 and the shuttle valve 32 BR, and is configured such that the channel area of the pipeline can be changed. In the present embodiment, the proportional valve 33BR operates in response to a control command output by the controller 30. Therefore, the controller 30 can supply hydraulic oil to the pilot port of the corresponding control valve in the control valve 17 through the shuttle valve 32BR after reducing the pressure of the hydraulic oil discharged by the operation device 26, regardless of the operation of the operation device 26 by the operator.

The operation pressure sensor 29B detects the operation content by the operator on the lever device 26B in the form of pressure (operation pressure), and a detection signal corresponding to the detected pressure is taken into the controller 30. Thus, the controller 30 can identify the operation content of the lever device 26B.

The controller 30 can cause the hydraulic oil discharged from the pilot pump 15 to be supplied to the pilot port on the left side of the control valve 174 via the proportional valve 31BL and the shuttle valve 32BL, regardless of the bucket closing operation on the lever device 26B by the operator. Further, the controller 30 can cause the hydraulic oil discharged from the pilot pump 15 to be supplied to the pilot port on the right side of the control valve 174 through the proportional valve 31BR and the shuttle valve 32BR regardless of the bucket opening operation to the lever device 26B by the operator. That is, the controller 30 can automatically control the opening and closing operation of the bucket 6. Further, the controller 30 can forcibly stop the operation of the hydraulic actuator corresponding to the specific operation device 26 even when an operation to the specific operation device 26 is being performed.

The operations of the proportional valves 33BL and 33BR, which forcibly stop the operation of the bucket 6 when a bucket closing operation or a bucket opening operation is performed by the operator, are the same as the operations of the proportional valves 33AL and 33AR, which forcibly stop the operation of the boom 4 when a boom raising operation or a boom lowering operation is performed by the operator, so overlapping explanations are omitted. Further, the proportional valves 33BL and 33BR may be omitted, similar to the proportional valves 33AL and 33AR.

For example, as illustrated in FIG. 4C, the lever device 26C is used by an operator or the like to operate the turning hydraulic motor 2A corresponding to the upper turning body 3 (the turning mechanism 2). The lever device 26C uses hydraulic oil discharged from the pilot pump 15 to output pilot pressure to the secondary side according to the operation.

In the shuttle valve 32CL, two inlet ports are respectively connected to the pilot line on the secondary side of the lever device 26C and the pilot line on the secondary side of the proportional valve 31CL corresponding to the left turning operation (hereafter, "left turning operation") of the upper turning body 3, and the outlet port is connected to the pilot port on the left side of the control valve 173.

In the shuttle valve 32CR, two inlet ports are respectively connected to the pilot line on the secondary side of the lever device 26C and the pilot line on the secondary side of the proportional valve 31CR corresponding to the right turning operation (hereafter, "right turning operation") of the upper turning body 3, and the outlet port is connected to the pilot port on the right side of the control valve 173.

That is, the lever device 26C applies pilot pressure according to the content of the operation in the left-right direction with respect to the pilot port of the control valve 173 via the shuttle valves 32CL and 32CR. Specifically, when the lever device 26C is operated to turn left, the pilot pressure corresponding to the operation amount is output to one of the inlet ports of the shuttle valve 32CL and is applied to the left pilot port of the control valve 173 via the shuttle valve 32CL. Further, when the lever device 26C is operated to turn right, the pilot pressure corresponding to the operation amount is output to one inlet port of the shuttle valve 32CR and is applied to the pilot port on the right side of the control valve 173 through the shuttle valve 32CR.

The proportional valve 31CL operates according to the control current input from the controller 30. Specifically, the proportional valve 31CL uses hydraulic oil discharged from the pilot pump 15 to output pilot pressure corresponding to the control current input from the controller 30 to the other pilot port of the shuttle valve 32CL. Thus, the proportional valve 31CL can adjust the pilot pressure acting on the left pilot port of the control valve 173 via the shuttle valve 32CL.

The proportional valve 31CR operates according to the control current output by the controller 30. Specifically, the proportional valve 31CR uses hydraulic oil discharged from the pilot pump 15 to output pilot pressure corresponding to the control current input from the controller 30 to the other pilot port of the shuttle valve 32CR. Thus, the proportional valve 31CR can adjust the pilot pressure acting on the pilot port on the right side of the control valve 173 via the shuttle valve 32CR.

That is, the proportional valves 31CL and 31CR can adjust the pilot pressure output to the secondary side such that the control valve 173 can be stopped at any valve position, regardless of the operation state of the lever device 26C.

The proportional valve 33CL, similar to the proportional valve 31CL, functions as a control valve for machine control. The proportional valve 33CL is arranged in the pipeline connecting the operation device 26 and the shuttle valve 32CL, and is configured such that the channel area of the pipeline can be changed. In the present embodiment, the proportional valve 33CL operates in response to a control command output by the controller 30. Therefore, the controller 30 can supply hydraulic oil to the pilot port of the corresponding control valve in the control valve 17 through the shuttle valve 32CL after reducing the pressure of the hydraulic oil discharged by the operation device 26, regardless of the operation of the operation device 26 by the operator.

Similarly, the proportional valve 33CR functions as a control valve for machine control. The proportional valve 33CR is arranged in the pipeline connecting the operation device 26 and the shuttle valve 32CR, and is configured such that the channel area of the pipeline can be changed. In the present embodiment, the proportional valve 33CR operates in response to a control command output by the controller 30. Therefore, the controller 30 can supply hydraulic oil to the pilot port of the corresponding control valve in the control valve 17 through the shuttle valve 32CR after reducing the pressure of the hydraulic oil discharged by the operation device 26 regardless of the operation of the operation device 26 by the operator.

The operation pressure sensor 29C detects the operation state of the lever device 26C by the operator as pressure, and a detection signal corresponding to the detected pressure is taken into the controller 30. Thus, the controller 30 can identify the contents of operations in the left-right direction with respect to the lever device 26C.

The controller 30 can cause the hydraulic oil discharged from the pilot pump 15 to be supplied to the pilot port on the left side of the control valve 173 via the proportional valve 31CL and the shuttle valve 32CL, regardless of the operator's left turning operation on the lever device 26C. Further, the controller 30 can cause the hydraulic oil discharged from the pilot pump 15 to be supplied to the pilot port on the right side of the control valve 173 through the proportional valve 31CR and the shuttle valve 32 CR, regardless of the operator's right turn operation on the lever device 26C. That is, the controller 30 can automatically control the left and right turning motion of the upper turning body 3. Further, the controller 30 can forcibly stop the operation of the hydraulic actuator corresponding to the specific operation device 26 even when the operation to the specific operation device 26 is being performed.

The operations of the proportional valves 33CL and 33CR, which forcibly stop the operation of the upper turning body 3 when the operator is performing the turning operation, are the same as the operations of the proportional valves 33AL and 33AR, which forcibly stop the operation of the boom 4 when the operator is performing the boom raising or boom lowering operation, so overlapping explanations are omitted. Further, the proportional valves 33CL and 33CR may be omitted, similar to the proportional valves 33AL and 33AR.

The excavator 100 may further have a configuration for automatically opening and closing the arm 5 and a configuration for automatically moving the lower traveling body 1 forward and backward. In this case, in the hydraulic system, the elements related to the operating system of the arm cylinder 8, the elements related to the operating system of the traveling hydraulic motor 1L, and the elements related to the operating system of the traveling hydraulic motor 1R may be configured in the same manner as the elements related to the operating system of the boom cylinder 7, etc. (FIGS. 4A to 4C).

[Configuration details for soil weight detection function of excavator]

Next, with reference to FIG. 5, the details of the configuration relating to the soil weight detection function of the excavator 100 according to the present embodiment will be described. FIG. 5 is a diagram schematically illustrating an example of the configuration portion of the excavator 100 related to the soil weight detection function.

As described above in FIG. 2, the controller 30 includes a soil weight processing part 60 as a functional section related to the function of detecting the weight (soil weight) of soil excavated by the bucket 6.

The soil weight processing part 60 includes a weight calculating part 61, a maximum load amount detecting part 62, a load amount calculating part 63, a remaining load amount calculating part 64, and a gravity center calculating part 65.

Here, an example of the operation of loading the soil (load) onto the dump truck by the excavator 100 according to the present embodiment will be described.

First, at the excavation position, the excavator 100 excavates the soil with the bucket 6 by controlling the attachment (excavation operation). Next, the excavator 100 turns the upper turning body 3 to move the bucket 6 from the excavation position to the soil discharging position (turning operation). The dump truck loading platform is located below the soil discharging position. Next, at the soil discharging position, the excavator 100 controls the attachment to discharge the soil in the bucket 6, thereby loading the soil in the bucket 6 to the loading platform of the dump truck (soil discharging operation). Next, the excavator 100 turns the upper turning body 3 to move the bucket 6 from the soil discharging position to the excavation position (turning operation). By repeating these operations, the excavator 100 loads the excavated soil into the loading platform of the dump truck.

The weight calculating part 61 calculates the weight of the soil (load) in the bucket 6. The weight calculating part 61 calculates the weight of the soil based on the thrust of the boom cylinder 7. For example, the weight calculating part 61 calculates the weight of the soil based on the thrust of the boom cylinder 7, the distance from a pin connecting the upper turning body 3 and the boom 4 to the center of gravity of the soil, and a formula of the moment around the pin connecting the upper turning body 3 and the boom 4.

The maximum load amount detecting part 62 detects the maximum load amount that can be loaded in the dump truck to be loaded with soil. For example, the maximum load amount detecting part 62 identifies the dump truck to be loaded with soil based on the image captured by the imaging device S6. "Based on the image captured by the imaging device S6" means, for example, using information obtained by performing one or more image processes to the image captured by the imaging device S6. Next, the maximum load amount detecting part 62 detects the maximum load amount that can be loaded in the dump truck based on the image of the identified dump truck. For example, the maximum load amount detecting part 62 determines the vehicle type (size, etc.) of the dump truck based on the image of the identified dump truck. The maximum load amount detecting part 62 has a table that associates the vehicle type with the maximum load amount, and obtains the maximum load amount of the dump truck based on the vehicle type determined from the image and the table. The maximum load amount of the dump truck, the vehicle type, etc., may be input with the input device 42, and the maximum load amount detecting part 62 may obtain the maximum load amount of the dump truck based on the information input by the input device 42.

The load amount calculating part 63 calculates the weight of soil loaded on the dump truck. That is, every time the soil in the bucket 6 is discharged to the loading platform of the dump truck, the load amount calculating part 63 adds the weight of the soil in the bucket 6 calculated by the weight calculating part 61, to calculate the loaded amount (total weight) that is the total weight of the soil loaded on the loading platform of the dump truck. The loaded amount is reset when the dump truck to be loaded with soil becomes a new dump truck.

The remaining load amount calculating part 64 calculates the difference between the maximum load amount of the dump truck detected by the maximum load amount detecting part 62 and the current loaded amount calculated by the load amount calculating part 63, as the remaining load amount. The remaining load is the remaining weight of soil that can be loaded onto a dump truck.

The gravity center calculating part 65 calculates the center of gravity of the soil (load) in the bucket 6. The calculation method of gravity center of soil will be described later.

The display device 40 may display the weight of soil in the bucket 6 calculated by the weight calculating part 61, the maximum load amount of the dump truck detected by the maximum load amount detecting part 62, the load amount of the dump truck calculated by the load amount calculating part 63 (the total weight of soil loaded on the loading platform), and the remaining load amount of the dump truck calculated by the remaining load amount calculating part 64 (the remaining weight of soil that can be loaded).

The display device 40 may be configured to issue a warning when the loaded amount exceeds the maximum load amount. Further, the display device 40 may be configured to issue a warning when the calculated weight of soil in the bucket 6 exceeds the remaining load amount. Note that the warning is not limited to being displayed on the display device 40, but the warning may be an audio output by the audio output device 43. This prevents soil from being loaded beyond the maximum load amount of the dump truck.

Here, a configuration example of a main screen 41V displayed on the display device 40 will be described with reference to FIG. 6. The information displayed on the main screen 41V of FIG. 6 includes, for example, information on the weight (present weight) of soil in the bucket 6, the load amount (accumulated weight) on the dump truck, the remaining load amount (remaining weight) that can be loaded on the dump truck, and the maximum load amount (maximum load weight).

The main screen 41V includes a date and time display area 41a, a traveling mode display area 41b, an attachment display area 41c, a fuel efficiency display area 41d, an engine control state display area 41e, an engine operating time display area 41f, a cooling water temperature display area 41g, a fuel remaining amount display area 41h, a speed mode display area 41i, a urea water remaining amount display area 41j, a hydraulic oil temperature display area 41k, a camera image display area 41m, a present weight display area 41p, an accumulated weight display area 41q, a remaining weight display area 41s, and a maximum load weight display area 41t.

The traveling mode display area 41b, the attachment display area 41c, the engine control state display area 41e, and the speed mode display area 41i are areas for displaying the setting state information, which is information related to the setting state of the excavator 100. The fuel efficiency display area 41d, the engine operating time display area 41f, the cooling water temperature display area 41g, the fuel remaining amount display area 41h, the urea water remaining amount display area 41j, the hydraulic oil temperature display area 41k, the present weight display area 41p, and the accumulated weight display area 41q are areas for displaying the operation state information, which is information related to the operation state of the excavator 100.

Specifically, the date and time display area 41a is an area for displaying the current date and time. The traveling mode display area 41b is an area for displaying the current traveling mode. The attachment display area 41c is an area for displaying an image representing the currently mounted end attachment. FIG. 6 illustrates the state in which an image representing the bucket 6 is displayed.

The fuel efficiency display area 41d is an area for displaying fuel efficiency information calculated by the controller 30. The fuel efficiency display area 41d includes an average fuel efficiency display area 41d1 for displaying lifetime average fuel efficiency or section average fuel efficiency and an instantaneous fuel efficiency display area 41d2 for displaying instantaneous fuel efficiency.

The engine control state display area 41e is an area for displaying the control state of the engine 11. The engine operating time display area 41f is an area for displaying the accumulated operating time of the engine 11. The cooling water temperature display area 41g is an area for displaying the current temperature state of the engine cooling water. The fuel remaining amount display area 41h is an area for displaying the remaining amount state of fuel stored in the fuel tank. The speed mode display area 41i is an area for displaying the current speed mode set by the engine speed adjustment dial. The urea water remaining amount display area 41j is an area for displaying the remaining amount state of the urea water stored in the urea water tank. The hydraulic oil temperature display area 41k is an area for displaying the temperature state of the hydraulic oil in the hydraulic oil tank.

The camera image display area 41m is an area for displaying images captured by the imaging device S6 as a space recognition device. In the example of FIG. 6, the camera image display area 41m displays the image captured by the camera S6B. The image captured by the camera S6B is a rear image projecting the space behind the excavator 100 and includes an image 3a of a counterweight.

The present weight display area 41p is an area for displaying the weight (present weight) of soil in the bucket 6. FIG. 6 illustrates that the present weight is 550 kg.

The accumulated weight display area 41q is an area for displaying the load amount (accumulated weight) of the dump truck. FIG. 6 illustrates that the accumulated weight is 9500 kg.

The accumulated weight is reset whenever the dump truck to be loaded is replaced by another dump truck. In the present embodiment, the controller 30 is configured to automatically recognize that the dump truck is replaced and automatically reset the accumulated weight. Specifically, the controller 30 recognizes the replacement of the dump truck by using the image captured by the imaging device S6. The controller 30 may use a communication device to recognize that the dump truck is replaced. Alternatively, the controller 30 may reset the accumulated weight when the reset button is pressed. The reset button may be a software button or a hardware button located on the input device 42, left operating lever, right operating lever, etc.

With this configuration, the excavator 100 can prevent a load such as soil from being loaded onto the loading platform of the dump truck in excess of the maximum load weight of the dump truck. Once the weight measurement on the platform detects that the load has exceeded the maximum load weight, the dump truck driver is required to return to the loading yard and take action to unload some of the load on the loading platform. The excavator 100 can prevent the occurrence of such load weight adjustment work.

The predetermined period may be, for example, the time from the start of the day's work to the end of the day's work. This is to enable the operator or manager to easily recognize the total weight of the load carried by one day's work.

Further, the controller 30 may be configured to recognize that the soil in the bucket 6 has been loaded onto the loading platform of the dump truck based on an image captured by the imaging device S6, and then calculate the present weight. This is to prevent soil transferred to places other than the loading platform of the dump truck, from being calculated as soil loaded onto the dump truck.

Based on the posture of the attachment, the controller 30 may determine whether the soil in the bucket 6 has been loaded onto the loading platform of the dump truck. Specifically, the controller 30 may determine, for example, that soil has been loaded onto the loading platform of a dump truck when the height of the bucket 6 exceeds a predetermined value (for example, the height of the loading platform of the dump truck) and the bucket 6 is opened.

The remaining weight display area 41s is an area for displaying the remaining weight. The maximum load weight display area 41t is the area for displaying the maximum load weight. FIG. 6 illustrates that the accumulated weight is 9,500 kg, the remaining weight is 500 kg, and the maximum load weight is 10,000 kg. However, the display device 40 may display the maximum load weight without displaying the remaining weight.

A message is displayed in a message display area 41m1. For example, a message will be displayed if the accumulated weight exceeds the maximum load weight. With this, the controller 30 can urge the operator to perform loading and unloading work and prevent the dump truck from being overloaded.

[Soil weight calculation method performed in weight calculating part 61]

Next, while referring to FIG. 5, a method of calculating the weight of soil (load) in the bucket 6 performed in the weight calculating part 61 of the excavator 100 according to the present embodiment will be described with reference to FIG. 7A and FIG. 7B.

FIGS. 7A and 7B are schematic diagrams illustrating the parameters for the calculation of soil weight. FIG. 7A illustrates the excavator 100 and FIG. 7B illustrates the vicinity of the bucket 6. In the following explanation, it is assumed that a pin P1 and a bucket center of gravity G3 and a soil gravity center Gs described later are located on a horizontal line L1.

Here, the pin connecting the upper turning body 3 and the boom 4 is denoted by P1. The pin connecting the upper turning body 3 and the boom cylinder 7 is denoted by P2. The pin connecting the boom 4 and the boom cylinder 7 is denoted by P3. The pin connecting the boom 4 and the arm cylinder 8 is denoted by P4. The pin connecting the arm 5 and the arm cylinder 8 is denoted by P5. The pin connecting the boom 4 and the arm 5 is denoted by P6. The pin connecting the arm 5 and the bucket 6 is denoted by P7. The center of gravity of the boom 4 is denoted by G1. The center of gravity of the arm 5 is denoted by G2. The center of gravity of the bucket 6 is denoted by G3. The center of gravity of the soil (load) loaded in the bucket 6 is denoted by Gs. A reference line L2 is a line passing through the pin P7 and is parallel to the opening surface of the bucket 6. The distance between the pin P1 and the center of gravity G1 of the boom 4 is denoted by D1. The distance between the pin P1 and the center of gravity G2 of the arm 5 is denoted by D2. The distance between the pin P1 and the center of gravity G3 of the bucket 6 is denoted by D3. The distance between the pin P1 and the center of gravity Gs of the soil is denoted by L1. The distance between the line connecting the pin P2 and the pin P3, and the pin P1, is denoted by Dc. The force due to the cylinder pressure of the boom cylinder 7 is denoted by Fb. Further, the vertical component of the boom weight (gravity due to the dead weight of the boom 4) in the direction perpendicular to the straight line connecting the pin P1 and the boom center of gravity G1 is denoted by W1a. Of the arm weight (gravity due to the dead weight of the arm 5), the component perpendicular to the line connecting the pin P1 and the arm center of gravity G2 is denoted by W2a. The weight of the bucket 6 is denoted by W3 and the weight of the soil (load) loaded in the bucket 6 is denoted by Ws.

As illustrated in FIG. 7A, the position of the pin P7 is calculated by the boom angle and the arm angle. That is, the position of the pin P7 can be calculated based on the detected values of the boom angle sensor S1 and the arm angle sensor S2.

Further, as illustrated in FIG. 7B, the positional relationship between the pin P7 and bucket center of gravity G3 (the angle $\theta 4$ between the reference line L2 of the bucket 6, and the line connecting the pin P7 and the bucket center of gravity G3; the distance D4 between the pin P7 and the bucket center of gravity G3) is a default value. The positional relationship between the pin P7 and the soil center of gravity Gs (the angle $\theta 5$ between the reference line L2 of the bucket 6 and the line connecting the pin P7 and the soil center of gravity Gs; the distance D5 between the pin P7 and the soil center of gravity Gs) is, for example, experimentally obtained in advance and stored in the controller 30. That is, the soil gravity center Gs and the bucket center of gravity G3 can be estimated based on the bucket angle sensor S3.

That is, the gravity center calculating part 65 can estimate the soil center of gravity Gs based on the detected values of the boom angle sensor S1, the arm angle sensor S2, and the bucket angle sensor S3.

Then, the equation of the balance between each moment around the pin P1 and the boom cylinder 7 can be expressed by equation (A1) below.

$$WsDs + W1aD1 + W2aD2 + W3D3 = FbDc \cdots (A1)$$

When equation (A1) is expanded with respect to the soil weight Ws, the equation can be expressed by equation (A2) below.

$$Ws = (FbDc - (W1aD1 + W2aD2 + W3D3))/Ds \cdots (A2)$$

Here, the force Fb due to the cylinder pressure of the boom cylinder 7 is calculated from at least one detected value of the boom rod pressure sensor S7R and the boom bottom pressure sensor S7B. The vertical component W1a of the distance Dc and the boom weight is calculated from the detected value of the boom angle sensor S1. The vertical component W2a and distance D2 of the arm weight are calculated from the respective detected values of the boom angle sensor S1 and the arm angle sensor S2. The distance D1 and the bucket weight W3 (gravity due to the weight of the bucket 6) are known values. The distance Ds and the distance D3 are also estimated by estimating the center of gravity Gs and the bucket center of gravity G3.

Therefore, the soil weight Ws can be calculated based on the detection value of the cylinder pressure of the boom cylinder 7 (detection values of the boom rod pressure sensor S7R and the boom bottom pressure sensor S7B), the boom angle (the detection value of the boom angle sensor S1), and the arm angle (the detection value of the arm angle sensor S2). Thus, the weight calculating part 61 can calculate the soil weight Ws based on the soil gravity center Gs estimated by the gravity center calculating part 65.

Whether the excavator 100 is currently performing a prescribed operation can be determined by estimating the posture of an attachment based on the detected value of the pilot pressure of the bucket cylinder 9.

With regard to the posture of the bucket 6 during a prescribed operation, it has been assumed that the opening surface of the bucket 6 is horizontal, in the explanation of estimating the center of gravity of the soil and calculating the weight of the soil, but the posture is not limited thereto. For example, the bucket 6 may be captured by the camera S6F for imaging the area in front of the excavator 100, and the posture of the bucket 6 may be estimated based on the image. Further, the bucket 6 may be captured by the camera S6F, and when the opening surface of the bucket 6 is determined to be horizontal based on the captured image, the center of gravity of soil and the weight of soil may be estimated.

Next, referring to FIG. 8 and FIG. 9, the function of the controller 30 to calculate and display the weight of the soil loaded on the dump truck DT during loading operation is explained. FIGS. 8 and 9 illustrate an example of a work site where loading of soil onto a dump truck DT, etc., is carried out by an excavator 100. Specifically, FIG. 8 is a top view of the work site. FIG. 9 is a view of the work site from the direction indicated by the arrow AR1 in FIG. 8. In FIG. 9, the excavator 100 (excluding the bucket 6) is omitted for clarity. In FIG. 8, the excavator 100 drawn with a solid line represents the state of the excavator 100 when an excavation operation is finished, the excavator 100 drawn with a dashed line represents the state of the excavator 100 during a combined operation, and the excavator 100 drawn with a dash-dot-dash line represents the state of the excavator 100 before a soil discharging operation is started. Similarly, in FIG. 9, a bucket 6A drawn with a solid line represents the state of the bucket 6 at the end of the excavation operation, a bucket 6B drawn with a dashed line represents the state of the bucket 6 during a combined operation, and a bucket 6C drawn with a dash-dot-dash line represents the state of the bucket 6 before the start of the soil discharging operation. The thick dashed lines in FIGS. 8 and 9 represent the trajectories drawn by predetermined points on the back surface of the bucket 6.

The controller 30 calculates the weight (soil weight) of the soil in the bucket 6 when the excavation operation is completed. Specifically, the weight calculating part 61 of the soil weight processing part 60 in the controller 30 calculates the soil weight. The weight calculating part 61 calculates the weight of soil based on the output of at least one of, for example, a posture sensor, a cylinder pressure sensor, and the operation pressure sensor 29. In the example illustrated in FIG. 8 and FIG. 9, the weight calculating part 61 calculates the weight of the soil based on the thrust of the boom cylinder 7, the distance from the pin connecting the upper turning body 3 and the boom 4 to the center of gravity of the soil, and the formula of the moment around the pin connecting the upper turning body 3 and the boom 4. The posture sensor is, for example, at least one of a boom angle sensor, the arm angle sensor S2, the bucket angle sensor S3, the machine body tilt sensor S4, and the turning state sensor S5.

The controller 30 may also determine whether the excavation operation has been completed based on the output of at least one of the posture sensor, the cylinder pressure sensor, the operation pressure sensor 29, etc.

In this example, when a predetermined point on the back surface of the bucket 6 is at a point PT1, the controller 30 determines that the excavation operation is finished, and the weight calculating part 61 calculates the weight of the soil. In this case, the point PT1 is referred to as the excavation end point.

The operator of the excavator 100 then performs a combined operation by using the operation device 26. In this example, the operator performs a combined operation involving a right turning operation. Specifically, the operator performs a combined operation, including at least one of a boom raising operation and an arm closing operation and a right turning operation, until the excavator 100 is in the position indicated by the dashed line, that is, until a predetermined point on the back surface of the bucket 6 reaches the point PT2. The combined operation may include the operation of the bucket 6. This is to move the bucket 6 to the point PT3 located above the loading platform while preventing the loading platform of the dump truck DT having a height Hd from coming into contact with the bucket 6. In this example, a boom raising and turning motion is performed by a combined operation.

The operator basically performs this combined operation so that soil, etc., does not spill from the bucket 6. This is because there is a risk of soil spilling from the bucket 6 and soiling the dump truck DT. Alternatively, this combined operation is performed because the soil spilled from the bucket 6 may soil a paved road. Therefore, when the bucket 6 is lifted into the air, for example, the operator vibrates the bucket 6 by performing the opening and closing operations of the bucket 6 multiple times with the opening surface of the bucket 6 facing upward, thereby moving the soil biased toward the front side of the bucket 6 to the rear side of the bucket 6. This is to prevent the soil from spilling out of the bucket 6 during the boom raising and turning operation by moving the soil to the rear side of the bucket 6 to level the soil in the bucket 6. Note that the vibration of the bucket 6 is typically implemented by slightly moving at least one of the boom 4, the arm 5, and the bucket 6. That is, the vibration of the bucket 6 is typically implemented by slightly expanding and contracting the boom cylinder 7, the arm cylinder 8, and the bucket cylinder 9.

The operator then performs a combined operation, including an arm opening operation and a right turn operation, until the excavator 100 is in the position indicated by the dash-dot-dash line, that is, until a predetermined point on the back surface of the bucket 6 reaches a point PT3 located above the loading platform of the dump truck DT. The combined operation may include at least one of the operation of the boom 4 and the operation of the bucket 6. In this case, the point PT3 is referred to as the start point of soil discharging. While the bucket 6 moves from the point PT1 to the point PT3, the soil weight in the bucket 6 is calculated. The soil weight is preferably calculated while the bucket 6 moves from the point PT1 to the point PT2.

The operator then starts the soil discharging operation. That is, the soil in the bucket 6 is dropped from inside the bucket 6 to the loading platform of the dump truck DT outside the bucket 6. In this example, the operator performs a combined operation involving a bucket opening operation. Specifically, the operator performs a combined operation including a bucket opening operation until the soil in the bucket 6 is discharged to the loading platform of the dump truck DT.

The bucket 6 may perform a bucket opening operation corresponding to the arm opening operation. Accordingly, the predetermined point on the back surface of the bucket 6 is moved from the point PT3 to the front of the dump truck DT. At least one of the arm opening speed and the bucket opening speed in this case may be controlled depending on the condition of soil dropping from the bucket 6 to the loading platform.

Then, the controller 30 updates the loaded amount (total weight) which is the total weight of the soil loaded on the loading platform of the dump truck DT when the bucket 6 is positioned above the loading platform of the dump truck DT. Specifically, the controller 30 calculates the loaded amount (total weight), which is the total weight of the soil loaded on the loading platform of the dump truck DT, when the soil discharging operation is finished. More specifically, every time the soil in the bucket 6 is discharged to the loading platform of the dump truck DT, the load amount calculating part 63 of the soil weight processing part 60 in the controller 30 updates the loaded amount (total weight) by adding the weight of soil in the bucket 6 calculated by the weight calculating part 61 to the current loaded amount (total weight).

In this example, when the soil in the bucket 6 is discharged to the loading platform of the dump truck DT, the load amount calculating part 63 updates the loaded amount (total weight) by adding the weight of the soil in the bucket 6 to the current loaded amount (total weight). Thus, the loaded amount (total weight), which is the total weight of the soil loaded on the loading platform of the dump truck DT, is updated on the condition that the bucket 6 is located above the loading platform of the dump truck DT.

On the other hand, when the soil in the bucket 6 is discharged to a place other than the loading platform of the dump truck DT, the load amount calculating part 63 does not add the weight of the soil in the bucket 6 to the current loaded amount (total weight).

Specifically, based on the image captured by the camera S6F, the load amount calculating part 63 determines whether the soil discharging operation has been performed when the bucket 6 is above the loading platform of the dump truck DT. More specifically, based on the image captured by the camera S6F, the load amount calculating part 63 recognizes the respective positions of the loading platform of the dump truck DT and the bucket 6, and then determines whether the soil discharging operation has been performed when the bucket 6 is above the loading platform of the dump truck DT. Based on the output of another space recognition device such as LIDAR, the load amount calculating part 63 may determine whether the soil discharging operation has been performed when the bucket 6 is above the loading platform of the dump truck DT.

Then, when it is determined that the soil discharging operation has been performed when the bucket 6 is located above the loading platform of the dump truck DT, the load amount calculating part 63 updates the loaded amount (total weight) by adding the weight of the soil in the bucket 6 to the current loaded amount (total weight).

On the other hand, when it is determined that the soil discharging operation has been performed when the bucket 6 is not above the loading platform of the dump truck DT, the load amount calculating part 63 does not add the weight of the soil in the bucket 6 to the current load amount (total weight). For example, this is to prevent the weight of soil discharged on the ground by the soil discharging operation during the setup work from being added to the loaded amount (total weight).

The load amount calculating part 63 may be configured to reset the loaded amount when it is determined that the dump truck DT has moved to carry out the soil. In this example, the load amount calculating part 63 determines whether the dump truck DT has moved (whether the dump truck DT has travelled away) based on the image captured by the camera S6F. The load amount calculating part 63 may determine whether the dump truck DT has moved based on the output of another space recognition device such as LIDAR. With this configuration, the operator of the excavator 100 does not have to perform troublesome operations such as pressing a reset button to reset the load amount each time the dump truck DT arrives at the work site (loading position) or exits the work site (loading position). At the work site where loading work is carried out, the operator not only performs loading work with respect to the dump truck DT by using an excavator, but also performs carrying work to carry soil to a position where loading is easy when the dump truck DT does not exist. This is to complete the loading work on the dump truck DT within a short time. Such transport operations also include excavation and soil discharging operations, but in the case of transport operations, it is not necessary to calculate the load (total weight). By using the functions described above, the excavator 100 can accurately calculate the loaded amount (total weight) when it is necessary to calculate the loaded amount (total weight).

As another embodiment, the load amount calculating part 63 may calculate the weight of the soil (soil dropped from inside the bucket 6) that has spilled out of the bucket 6 after the end of the excavation operation and before the start of the soil discharging operation, as the amount of spill. Then, when updating the loaded amount (total weight) by adding the weight of the soil in the bucket 6 to the current loaded amount (total weight), the load amount calculating part 63 may subtract the amount of spillage from the weight of the soil in the bucket 6. This is to prevent the weight of soil that has spilled from the bucket 6 without being loaded onto the loading platform of the dump truck DT, from being added to the loaded amount (total weight).

In the example illustrated in FIG. 9, when spillage (dropping of soil) from the bucket 6 occurs, the load amount calculating part 63 determines whether the spilled soil has dropped inside the loading platform of the dump truck DT or outside the loading platform of the dump truck DT based on the output of the space recognition device. For example, the load amount calculating part 63 calculates the weight of soil SF1 spilled from the bucket 6 to the ground outside the loading platform of the dump truck DT during the boom raising and turning operation, as the amount of spill. When the soil drops outside the loading platform of the dump truck DT in this way, the weight of the soil SF1 dropping outside the loading platform of the dump truck DT is not included in the weight of the soil in the bucket 6. That is, the load amount calculating part 63 updates the loaded amount (total weight) by adding the weight of the soil in the bucket 6 minus the spillage, to the loaded amount (total weight) of the current dump truck DT. However, the load amount calculating part 63 makes sure that the weight of the soil SF2 spilled from the bucket 6 to the loading platform of the dump truck DT, is not included in the amount of spillage, even if the soil has spilled from the bucket 6 before the soil discharging operation is started. This is because the soil spilled from the bucket 6 onto the loading platform of the dump truck DT is still soil loaded onto the loading platform of the dump truck DT. In this case, the load amount calculating part 63 may omit the calculation of the amount of spillage.

Thus, when the soil spilled from the bucket 6 drops inside the loading platform of the dump truck DT (in the case of the soil SF2), the load amount calculating part 63 updates the loaded amount (total weight) by adding the weight of the soil in the bucket 6 calculated before the soil discharging operation is started to the loaded amount (total weight) of the current dump truck DT.

Specifically, based on the image captured by the camera S6F, the load amount calculating part 63 determines whether soil has spilled from the bucket 6. When it is determined that the soil has spilled from the bucket 6, the load amount calculating part 63 calculates the volume of the soil spilled from the bucket 6 based on the image captured by the camera S6F. The load amount calculating part 63 may calculate the volume of the soil based on the image of the soil when the soil spilled from the bucket 6 is in the air (the first image), and when the soil drops to the ground, the volume of the soil may be calculated based on the image of the soil after the soil drops to the ground (the second image), or the volume of the soil may be calculated based on both the first and second images. The load amount calculating part 63 then multiplies the calculated volume value by the density of the soil to derive the weight of the soil (amount of spill). The soil density may be a pre-input value or a dynamically calculated value based on the output of at least one of the posture sensor, the cylinder pressure sensor, the operation pressure sensor 29, etc. The load amount calculating part 63 may also determine whether soil has spilled from the bucket 6 based on the output of another space recognition device such as LIDAR, or calculate the volume of soil spilled from the bucket 6.

The load amount calculating part 63 may also determine whether the soil dropping from the bucket 6 has dropped the outside of the loading platform of the dump truck DT or to the inside of the loading platform not only before the soil discharging operation is started but also during the soil discharging operation. Also, when soil drops outside the loading platform of the dump truck DT during the soil discharging operation, the weight of soil that drops outside the loading platform of the dump truck DT is not included in the amount of spillage.

If the load amount calculating part 63 determines that soil has spilled from the bucket 6, the weight calculating part 61 may recalculate the weight (soil weight) of soil in the bucket 6. For example, the weight calculating part 61 may recalculate the soil weight when the bucket 6 reaches the point PT3, which is the soil discharge starting point. In this case, the weight calculating part 61 may calculate soil weight based on the output of at least one of, for example, a posture sensor, a cylinder pressure sensor, and the operation pressure sensor 29.

As another embodiment, the weight calculating part 61 may calculate the weight (soil weight) of soil in the bucket 6 based on the image captured by the camera S6F. In this case, calculation of the soil weight based on the output of at least one of the posture sensor, the cylinder pressure sensor, the operation pressure sensor 29, etc., may be omitted. For example, when it is determined that the excavation operation has been completed, the weight calculating part 61 calculates the volume of soil contained in the bucket 6 based on the image of soil in the bucket 6 captured by the camera S6F. Then, the weight calculating part 61 derives the weight of the soil (soil weight) by multiplying the calculated volume value by the density of the soil. The soil density may be a pre-input value or a dynamically calculated value based on the output of at least one of the posture sensor, the cylinder pressure sensor, the operation pressure sensor 29, etc. The weight calculating part 61 may also calculate the weight (soil weight) of the soil in the bucket 6 based on the output of another space recognition device such as LIDAR.

As described above, the excavator 100 according to an embodiment of the present invention is equipped with the lower traveling body 1, the upper turning body 3 mounted on the lower traveling body 1 so as to be able to turn, an attachment mounted on the upper turning body 3, the bucket 6 constituting the attachment, and the controller 30 as a control device. Based on the output of the imaging device S6 and the weight of the object (soil, etc.) in the bucket 6, the controller 30 is configured to calculate the weight of the object (soil, etc.) transferred from the inside of the bucket 6 to the loading platform of the dump truck DT that is a transport vehicle. The imaging device S6 is an example of a space recognition device. The space recognition device is a device for recognizing the space around the upper turning body 3, and in the present embodiment, the space recognition device is attached to the upper turning body 3. However, the space recognition device may be mounted on a member outside the excavator 100 such as a pole installed in the work site.

With this configuration, the controller 30 can recognize whether the bucket 6 has been lifted above the loading platform of the dump truck DT, or whether soil has spilled from the bucket 6 between the time when the excavation operation is finished and the time when the soil discharging operation is started. Therefore, the controller 30 can more accurately calculate the loaded amount, which is the amount of load that is loaded on the dump truck DT.

The controller 30 may be configured to add the weight of the object in the bucket 6 (such as soil) to the weight of the object loaded on the loading platform of the dump truck DT when the soil discharging operation is performed on the loading platform of the dump truck DT.

With this configuration, the controller 30 can prevent the weight of soil in the bucket 6 from being added to the load when the soil discharging operation is performed at a position other than above the loading platform of the dump truck DT. For example, the controller 30 can prevent the weight of soil discharged on the ground from being added to the loaded amount by the soil discharging operation during the setup work. This is because the controller 30 can accurately distinguish between the soil discharging operation performed during the loading work and the soil discharging operation performed during the setup work.

The controller 30 may calculate the weight of an object (such as soil) in the bucket 6 based on the output of the space recognition device, or may calculate the weight of an object (such as soil) in the bucket 6 based on the output of a sensor different from the space recognition device. Further, the controller 30 may calculate the weight of an object (such as soil) in the bucket 6 based on the output of two or more sensors, including a space recognition device. For example, the controller 30 may calculate the weight of an object (soil, etc.) in the bucket 6 based on the image captured by the imaging device S6, or may calculate the weight of an object (soil, etc.) in the bucket 6 based on the output of at least one of the posture sensor, the cylinder pressure sensor, the operation pressure sensor 29, etc. When calculating the weight of an object (soil, etc.) in the bucket 6 based on the output of the space recognition device, the controller 30 can calculate the weight (present weight) of soil in the bucket 6, the weight (accumulated weight) of soil loaded on the dump truck DT, the maximum load weight of the dump truck DT, and the remaining weight (difference between the maximum load weight and the accumulated weight) based only on the output of the space recognition device.

The controller 30 may be configured to determine the necessity of resetting the weight of soil loaded onto the loading platform of the dump truck DT based on the output of the space recognition device. For example, the controller 30 may reset the accumulated weight to zero when the controller 30 recognizes that the dump truck DT that was parked at the loading position has travelled away, based on the image captured by the imaging device S6 that is a space recognition device.

With this configuration, the controller 30 can improve the operability of the excavator 100. This is because the controller 30 can automatically reset the accumulated weight without forcing the operator of the excavator 100 to perform troublesome operations such as pressing a reset button to reset the accumulated weight. As a result, this configuration can enhance the work efficiency of the operator of the excavator 100.

The controller 30 may determine the presence or absence of soil spilled from the bucket 6 based on the output of the space recognition device. For example, the controller 30 may determine the presence or absence of soil spilled from the bucket 6 based on an image captured by the imaging device S6 as a space recognition device.

Then, for example, if the controller 30 determines that soil spilled from the bucket 6 exists, the soil weight may be recalculated when the bucket 6 reaches the point PT3 (see FIGS. 8 and 9.), which is the soil discharge starting point.

With this configuration, the controller 30 can more accurately calculate the loaded amount, which is the weight of soil loaded onto the dump truck DT.

The controller 30 may be configured to calculate the weight of soil spilled from the bucket 6 outside the loading platform of the dump truck DT based on the output of the space recognition device. For example, the controller 30 may be configured to estimate the volume of soil spilled from the bucket 6 based on the image captured by the imaging device S6 as a space recognition device, and to calculate the weight of soil by multiplying the estimated volume by the density.

In this case, the controller 30 can estimate the weight of the spilled soil based on, for example, the pre-input soil characteristics (density, etc.) and the state of the spilled soil (area or volume, etc.) determined from the information acquired by the space recognition device. The controller 30 may calculate the weight of spilled soil by using a table or a learning model, etc., which has a preset relationship between the soil state determined by the space recognition device and the soil weight. Learning models are used, for example, to learn the weight calculation condition associated with the soil state. The learning model learns, for example, the relationship (weight calculation condition) between the state and the weight of the spilled soil according to a data set created based on the combination of the state of spilled soil determined by the space recognition device based on the captured images of soil acquired by the space recognition device (shape information, etc.), and reference information representing the "weight of soil" as determination data stored in advance in the storage device. The learning process of the learning model is pre-executed, for example, by a management device external to the excavator 100. In this case, the learning model for which the learning process has been performed in the management device is transmitted to the excavator 100 in advance. The controller 30, for example, uses the learning model to determine the weight of the spilled soil corresponding to the determined state of the spilled soil, and uses the determined weight of the soil to calculate the weight of the soil in the loading platform of the dump truck DT.

The controller 30 may also determine whether the soil spilled from the bucket 6 has dropped onto the loading platform or outside the loading platform based on the relative position relationship between the bucket 6 and the loading platform of the dump truck DT.

Then, the controller 30 may be configured to update (correct) the weight of the material loaded on the loading platform of the dump truck DT by subtracting the weight of the material spilled outside the loading platform from the bucket 6 from the weight of the object loaded on the loading platform of the dump truck DT.

With this configuration, the controller 30 can prevent the weight of soil spilled out of the bucket 6 and out of the loading platform from being added to the loaded amount and can calculate the loaded amount more accurately.

The controller 30 may be configured to add the weight of soil in the bucket 6 to the weight of soil loaded on the loading platform of the dump truck DT when the bucket 6 is positioned above the loading platform of the dump truck DT.

Alternatively, the controller 30 may be configured to add the weight of the soil in the bucket 6 to the weight of the soil loaded on the loading platform of the dump truck DT when the soil in the bucket 6 drops from the bucket 6 onto the loading platform of the dump truck DT.

With these configurations, the controller 30 can prevent, for example, the weight of soil discharged on the ground by the soil discharging operation during setup work from being added to the loaded amount (total weight).

The controller 30 may be configured to determine whether soil in the bucket 6 drops from the bucket 6 onto the loading platform of the dump truck DT or outside the loading platform.

With this configuration, the controller 30 can prevent the weight of soil dropped from the bucket 6 outside the loading platform of the dump truck DT from being added to the loaded amount (total weight), and can appropriately add the weight of soil dropped from the bucket 6 onto the loading platform of the dump truck DT to the loaded amount (total weight).

When the object in the bucket drops outside the loading platform, the controller 30 may be configured to calculate the weight in the bucket 6 after the object contained in the bucket 6 has dropped. For example, if it is determined that the drop of an object in the bucket 6 is a drop outside the loading platform, the controller 30 may be configured to recalculate the weight in the bucket 6 after the determination and before the soil discharging operation. This is to calculate the weight of the soil remaining in the bucket 6 based on the information acquired after the soil has dropped from the bucket 6, not the information acquired before the soil has dropped from the bucket 6.

Further, the controller 30 may acquire the shape of soil discharged into the loading platform by a space recognition device. In this case, the controller 30 can determine whether the arm opening speed and the bucket opening speed during the previous soil discharging operation are appropriate based on the shape of the soil discharged into the loading platform during the previous soil discharging operation. For example, the controller 30 can determine that the bucket opening speed is faster than the arm opening speed when the soil in the loading platform has a shape that is higher at a position closer to the excavator 100. Further, the controller 30 can determine that the bucket opening speed is slower than the arm opening speed when the soil in the loading platform has a shape that is higher at a position farther from the excavator 100. Thus, the controller 30 can control the bucket opening speed against the arm opening speed based on, for example, the shape of the soil in the loading platform. In this way, the controller 30 can make the shape of the soil in the loading platform uniform by the soil discharging operation. Further, the controller 30 may determine that leveling is necessary when the difference in the elevation of the soil at each place in the loading platform is greater than or equal to a predetermined height. In this case, the controller 30 sets a target trajectory so that the height of the target trajectory is lower than the protruding part of the soil so that the back surface of the bucket 6 abuts against the protruding part of the loaded soil in order to even out the protruding part of the loaded soil, for example, in the next soil discharging operation. Thus, the controller 30 can perform the opening operation of the bucket 6 while abutting the back surface of the bucket 6 on the protruding part of the loaded soil. Therefore, the excavator 100 can even the soil in the loading platform while performing the soil discharging operation.

The controller 30 may control the bucket opening speed and the arm opening speed at this time by a learning model based on the soil shape in the loading platform. The learning model learns, for example, the control condition associated with the soil shape in the loading platform. Specifically, the learning model learns, for example, the relationship (attachment opening control condition) between the state of the soil in the loading platform and the opening state of each of the arm 5 and the bucket 6, according to a data set created based on the combination of the state of soil in the loading platform determined based on a captured image of the soil in the loading platform acquired by the space recognition device (soil shape information, etc.), and reference information representing the "preferable opening and closing state of the attachment" as determination data stored in advance in the storage device. The learning process of the learning model may be performed, for example, in a management device connected to an excavator 100 via wireless communication. In this case, the learning model in which the learning process is performed in the management device is transmitted to the excavator 100. By using the learning model, the controller 30 obtains the preferred attachment opening control state corresponding to the determined soil state in the loading platform, and controls an actuator so that the obtained attachment opening control state is achieved. In this way, the controller 30 can control the attachment to change the shape of the soil in the loading platform so that the soil discharged into the loading platform does not slide from the loading platform to the outside of the dump truck DT.

The present embodiment has been described above with reference to specific examples. However, the present invention is not limited to these specific examples. Those specific examples to which a person skilled in the art has made appropriate design changes are also included in the scope of the invention as long as they have the features of the invention. Each element and the arrangement, conditions, shape, etc., thereof provided in each of the aforementioned specific examples are not limited to those described and may be changed as appropriate. The elements included in each of the aforementioned examples may be combined as appropriate, unless technical inconsistencies arise.

For example, in the above embodiment, the controller 30 is installed on the excavator 100, but may be installed outside the excavator 100. In this case, the controller 30 may be, for example, a controller installed in a remote control room.

[Reference Signs List]

1 lower traveling body
1L, 1R traveling hydraulic motor
2 turning mechanism
2A turning hydraulic motor
2A1 first port
2A2 second port
3 upper turning body
4 boom
5 arm
6 bucket
7 boom cylinder
8 arm cylinder
9 bucket cylinder
10 cabin
11 engine
13 regulator
14 main pump
15 pilot pump
18L, 18R throttle
19L, 19R control pressure sensor
21, 22 hydraulic sensor
23, 24 relief valve
26 operation device
28 discharge pressure sensor
29, 29A to 29C operation pressure sensor
30 controller
31AL, 31AR, 31BL, 31BR, 31CL, 31CR proportional valve
32AL, 32AR, 32BL, 32BR, 32CL, 32CR shuttle valve
33AL, 33AR, 33BL, 33BR, 33CL, 33CR proportional valve
40 display device
42 input device
43 audio output device
47 storage device
50 machine guidance part
51 position calculating part
52 distance calculating part
53 information transmitting part

54 automatic control part
55 turning angle calculating part
56 relative angle calculating part
60 soil weight processing part
61 weight calculating part
62 maximum load amount detecting part
63 load amount calculating part
64 remaining load amount calculating part
65 gravity center calculating part
100 excavator
171 to 176 control valve
DT dump truck
PS positioning device
S1 boom angle sensor
S2 arm angle sensor
S3 bucket angle sensor
S4 machine body tilt sensor
S5 turning state sensor
S6 imaging device
S6B, S6F, S6L, S6R camera
S7B boom bottom pressure sensor
S7R boom rod pressure sensor
S8B arm bottom pressure sensor
S8R arm rod pressure sensor
S9B bucket bottom pressure sensor
S9R bucket rod pressure sensor
T1 communication device

## Claims

**1.** An excavator (100) comprising:

a lower traveling body (1);
an upper turning body (3) turnably mounted to the lower traveling body (1);
an attachment that is attached to the upper turning body (3);
a bucket (6) constituting the attachment; and
a control device (30) configured to calculate a weight of an object that is moved from inside the bucket (6) onto a loading platform of a transport vehicle, based on output of a space recognition device (S6), configured to recognize a space surrounding the upper turning body (3), and the weight of the object in the bucket (6) **characterized in that** the control device (30) is configured to determine whether the object in the bucket (6) that drops from the bucket (6) drops onto the loading platform of the transport vehicle or drops outside of the loading platform.

**2.** The excavator (100) according to claim 1, wherein the control device (30) adds the weight of the object in the bucket (6) to the weight of the object loaded onto the loading platform of the transport vehicle, when a soil discharging operation is performed on the loading platform of the transport vehicle.

**3.** The excavator (100) according to claim 1, wherein the weight of the object in the bucket (6) is calculated based on output of a sensor other than the space recognition device (S6).

**4.** The excavator (100) according to claim 1, wherein the control device (30) determines whether it is necessary to reset the weight of the object loaded onto the loading platform of the transport vehicle, based on the output of the space recognition device (S6).

**5.** The excavator (100) according to claim 1, wherein the control device (30) determines whether any part of the object has spilled from the bucket (6), from when an excavation operation is ended to when a soil discharging operation is started, based on the output of the space recognition device (S6).

6. The excavator (100) according to claim 5, wherein the control device (30) updates the weight of the object loaded onto the loading platform of the transport vehicle, by subtracting the weight of the object spilled from the bucket (6) to outside of the loading platform of the transport vehicle, from the weight of the object loaded onto the loading platform of the transport vehicle.

7. The excavator (100) according to claim 1, wherein the control device (30) adds the weight of the object in the bucket (6) to the weight of the object loaded onto the loading platform of the transport vehicle, when the bucket (6) is positioned above the loading platform of the transport vehicle.

8. The excavator (100) according to claim 1, wherein the control device (30) adds the weight of the object in the bucket (6) to the weight of the object loaded onto the loading platform of the transport vehicle, when the object in the bucket (6) drops from the bucket (6) onto the loading platform of the transport vehicle.

9. The excavator (100) according to claim 1, wherein when the object in the bucket (6) drops outside of the loading platform, the control device (30) calculates the weight in the bucket (6) after the object drops outside of the loading platform.

10. A control device for an excavator (100) including a lower traveling body (1); an upper turning body (3) turnably mounted to the lower traveling body (1); an attachment that is attached to the upper turning body (3); and a bucket (6) constituting the attachment,

   wherein the control device (30) is configured to calculate a weight of an object that is moved from inside the bucket (6) onto a loading platform of a transport vehicle, based on output of a space recognition device (S6), configured to recognize a space surrounding the upper turning body (3), and the weight of the object in the bucket (6)
   **characterized in that** the control device (30) is configured to determine whether the object in the bucket (6) that drops from the bucket (6) drops onto the loading platform of the transport vehicle or drops outside of the loading platform.

## Patentansprüche

1. Bagger (100) umfassend:

   einen unteren Fahrkörper (1);
   einen oberen Drehkörper (3), der drehbar an dem unteren Fahrkörper (1) montiert ist;
   ein Ansatzstück, das an dem oberen Drehkörper (3) angebracht ist;
   eine Schaufel (6), die das Ansatzstück bildet, und
   eine Steuervorrichtung (30), die so konfiguriert ist, dass sie ein Gewicht eines Objekts, das aus dem Inneren der Schaufel (6) auf eine Ladeplattform eines Transportfahrzeugs bewegt wird, auf der Grundlage von Ausgabe einer Raumerkennungsvorrichtung (S6), die so konfiguriert ist, dass sie einen den oberen Drehkörper (3) umgebenden Raum erkennt, und des Gewichts des Objekts in der Schaufel (6) berechnet
   **dadurch gekennzeichnet, dass** die Steuervorrichtung (30) so konfiguriert ist, dass sie bestimmt, ob das Objekt in der Schaufel (6), das aus der Schaufel (6) fällt, auf die Ladeplattform des Transportfahrzeugs fällt oder außerhalb von der Ladeplattform fällt.

2. Bagger (100) nach Anspruch 1, wobei die Steuervorrichtung (30) das Gewicht des Objekts in der Schaufel (6) zu dem Gewicht des auf der Ladefläche des Transportfahrzeugs geladenen Objekts addiert, wenn auf der Ladefläche des Transportfahrzeugs ein Bodenentladevorgang durchgeführt wird.

3. Bagger (100) nach Anspruch 1, wobei das Gewicht des Objekts in der Schaufel (6) auf der Grundlage von Ausgabe eines Sensors, der von der Raumerkennungsvorrichtung (S6) verschieden ist, berechnet wird.

4. Bagger (100) nach Anspruch 1, wobei die Steuervorrichtung (30) auf der Grundlage der Ausgabe der Raumerkennungsvorrichtung (S6) bestimmt, ob es notwendig ist, das Gewicht des auf die Ladefläche des Transportfahrzeugs geladenen Objekts zurückzusetzen.

5. Bagger (100) nach Anspruch 1, wobei die Steuervorrichtung (30) auf der Grundlage der Ausgabe der Raumerkennungsvorrichtung (S6) bestimmt, ob irgendein Teil des Objekts aus der Schaufel (6) verschüttet wurde, von dem Zeitpunkt an, an dem ein Aushubvorgang beendet wird, bis zu dem Zeitpunkt, an dem ein Bodenentleerungsvorgang gestartet wird.

**6.** Bagger (100) nach Anspruch 5, wobei die Steuervorrichtung (30) das Gewicht des auf die Ladefläche des Transportfahrzeugs geladenen Objekts aktualisiert, indem sie das Gewicht des aus der Schaufel (6) außerhalb der Ladefläche des Transportfahrzeugs verschütteten Objekts von dem Gewicht des auf die Ladefläche des Transportfahrzeugs geladenen Objekts subtrahiert.

**7.** Bagger (100) nach Anspruch 1, wobei die Steuervorrichtung (30) das Gewicht des Objekts in der Schaufel (6) zu dem Gewicht des auf der Ladefläche des Transportfahrzeugs geladenen Objekts addiert, wenn die Schaufel (6) über der Ladefläche des Transportfahrzeugs positioniert ist.

**8.** Bagger (100) nach Anspruch 1, wobei die Steuervorrichtung (30) das Gewicht des Objekts in der Schaufel (6) zu dem Gewicht des auf die Ladefläche des Transportfahrzeugs geladenen Objekts addiert, wenn das Objekt in der Schaufel (6) aus der Schaufel (6) auf die Ladefläche des Transportfahrzeugs fällt.

**9.** Bagger (100) nach Anspruch 1, wobei die Steuervorrichtung (30), wenn das Objekt in der Schaufel (6) außerhalb der Ladeplattform fällt, das Gewicht in der Schaufel (6) berechnet, nachdem das Objekt außerhalb der Ladeplattform fällt.

**10.** Steuervorrichtung für einen Bagger (100), umfassend einen unteren Fahrkörper (1); einen oberen Drehkörper (3), der drehbar an dem unteren Fahrkörper (1) montiert ist; ein Ansatzstück, das an dem oberen Drehkörper (3) angebracht ist; und eine Schaufel (6), die das Ansatzstück bildet, wobei die Steuervorrichtung (30) so konfiguriert ist, dass sie ein Gewicht eines Objekts, das aus dem Inneren der Schaufel (6) auf eine Ladeplattform eines Transportfahrzeugs bewegt wird, auf der Grundlage von Ausgabe einer Raumerkennungsvorrichtung (S6), die so konfiguriert ist, dass sie einen den oberen Drehkörper (3) umgebenden Raum erkennt, und des Gewichts des Objekts in der Schaufel (6) berechnet,
**dadurch gekennzeichnet, dass** die Steuervorrichtung (30) so konfiguriert ist, dass sie bestimmt, ob das Objekt in der Schaufel (6), das aus der Schaufel (6) fällt, auf die Ladeplattform des Transportfahrzeugs fällt oder außerhalb von der Ladeplattform fällt.

## Revendications

**1.** Une excavatrice (100) comprenant :

un corps mobile inférieur (1) ;
un corps rotatif supérieur (3) monté de manière rotative sur le corps mobile inférieur (1) ;
un accessoire qui est fixé au corps rotatif supérieur (3) ;
un godet (6) constituant l'accessoire ; et
un dispositif de commande (30) configuré pour calculer un poids d'un objet qui est déplacé depuis l'intérieur du godet (6) vers une plateforme de chargement d'un véhicule de transport, sur la base d'une sortie d'un dispositif de reconnaissance spatiale (S6), configuré pour reconnaître un espace entourant le corps rotatif supérieur (3), et le poids de l'objet dans le godet (6),
**caractérisée en ce que** le dispositif de commande (30) est configuré pour déterminer si l'objet dans le godet (6) qui tombe depuis le godet (6) tombe sur la plateforme de chargement du véhicule de transport ou tombe à l'extérieur de la plateforme de chargement.

**2.** L'excavatrice (100) selon la revendication 1, dans laquelle le dispositif de commande (30) ajoute le poids de l'objet dans le godet (6) au poids de l'objet chargé sur la plateforme de chargement du véhicule de transport, lorsqu'une opération de déchargement de terre est effectuée sur la plateforme de chargement du véhicule de transport.

**3.** L'excavatrice (100) selon la revendication 1, dans laquelle le poids de l'objet dans le godet (6) est calculé sur la base d'une sortie d'un capteur autre que le dispositif de reconnaissance spatiale (S6).

**4.** L'excavatrice (100) selon la revendication 1, dans laquelle le dispositif de commande (30) détermine s'il est nécessaire de réinitialiser le poids de l'objet chargé sur la plateforme de chargement du véhicule de transport, sur la base de la sortie du dispositif de reconnaissance spatiale (S6).

**5.** L'excavatrice (100) selon la revendication 1, dans laquelle le dispositif de commande (30) détermine si une partie quelconque de l'objet s'est déversée du godet (6), entre le moment où une opération d'excavation est terminée et le moment où une opération de déchargement de terre est commencée, sur la base de la sortie du dispositif de reconnaissance spatiale (S6).

**6.** L'excavatrice (100) selon la revendication 5, dans laquelle le dispositif de commande (30) met à jour le poids de l'objet chargé sur la plateforme de chargement du véhicule de transport, en soustrayant le poids de l'objet déversé du godet (6) à l'extérieur de la plateforme de chargement du véhicule de transport, du poids de l'objet chargé sur la plateforme de chargement du véhicule de transport.

**7.** L'excavatrice (100) selon la revendication 1, dans laquelle le dispositif de commande (30) ajoute le poids de l'objet dans le godet (6) au poids de l'objet chargé sur la plateforme de chargement du véhicule de transport, lorsque le godet (6) est positionné au-dessus de la plateforme de chargement du véhicule de transport.

**8.** L'excavatrice (100) selon la revendication 1, dans laquelle le dispositif de commande (30) ajoute le poids de l'objet dans le godet (6) au poids de l'objet chargé sur la plateforme de chargement du véhicule de transport, lorsque l'objet dans le godet (6) tombe depuis le godet (6) sur la plateforme de chargement du véhicule de transport.

**9.** L'excavatrice (100) selon la revendication 1, dans laquelle lorsque l'objet dans le godet (6) tombe à l'extérieur de la plateforme de chargement, le dispositif de commande (30) calcule le poids dans le godet (6) après que l'objet tombe à l'extérieur de la plateforme de chargement.

**10.** Un dispositif de commande pour une excavatrice (100) incluant un corps mobile inférieur (1) ; un corps rotatif supérieur (3) monté de manière rotative sur le corps mobile inférieur (1) ; un accessoire qui est fixé au corps rotatif supérieur (3) et un godet (6) constituant l'accessoire,

dans lequel le dispositif de commande (30) est configuré pour calculer un poids d'un objet qui est déplacé depuis l'intérieur du godet (6) vers une plateforme de chargement d'un véhicule de transport, sur la base d'une sortie d'un dispositif de reconnaissance spatiale (S6), configuré pour reconnaître un espace entourant le corps rotatif supérieur (3), et le poids de l'objet dans le godet (6),
**caractérisé en ce que** le dispositif de commande (30) est configuré pour déterminer si l'objet dans le godet (6) qui tombe depuis le godet (6) tombe sur la plateforme de chargement du véhicule de transport ou tombe à l'extérieur de la plateforme de chargement.

FIG.1

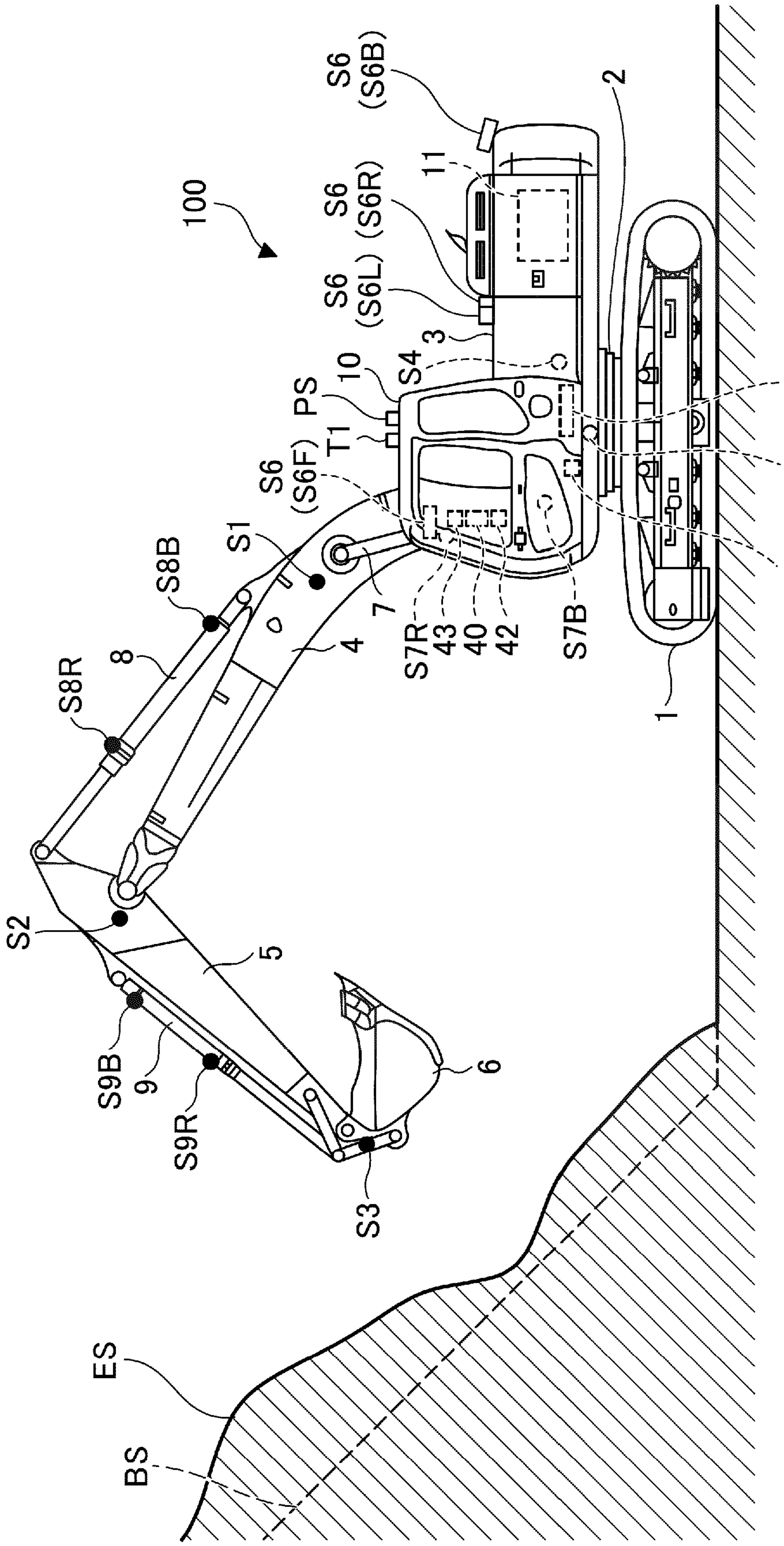
100
S6
(S6B)
11
S6
(S6R)
S6
(S6L)
2
3
S4
10
PS
T1
S6
(S6F)
30
S5
47
S1
7
S7R
43
40
42
S7B
1
S8B
8
4
S8R
S2
5
S9B
9
S9R
6
S3
ES
BS

FIG.2

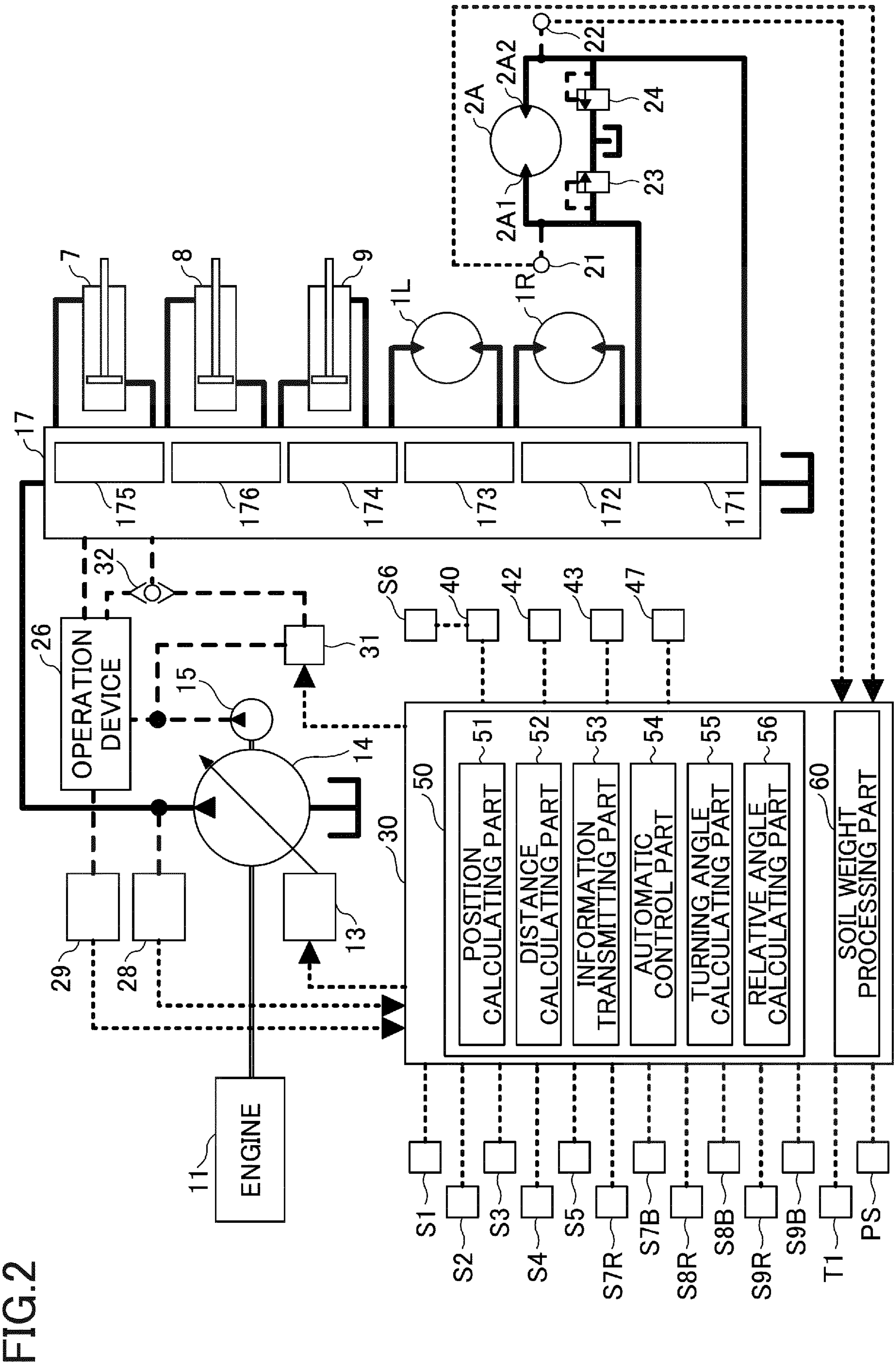

ENGINE
11
13
14
15
26
OPERATION DEVICE
28
29
30
31
32
17
175
176
174
173
172
171
7
8
9
1L
1R
2A
2A1
2A2
21
22
23
24
S6
40
42
43
47
50
51
POSITION CALCULATING PART
52
DISTANCE CALCULATING PART
53
INFORMATION TRANSMITTING PART
54
AUTOMATIC CONTROL PART
55
TURNING ANGLE CALCULATING PART
56
RELATIVE ANGLE CALCULATING PART
60
SOIL WEIGHT PROCESSING PART
S1
S2
S3
S4
S5
S7R
S7B
S8R
S8B
S9R
S9B
T1
PS

FIG.3

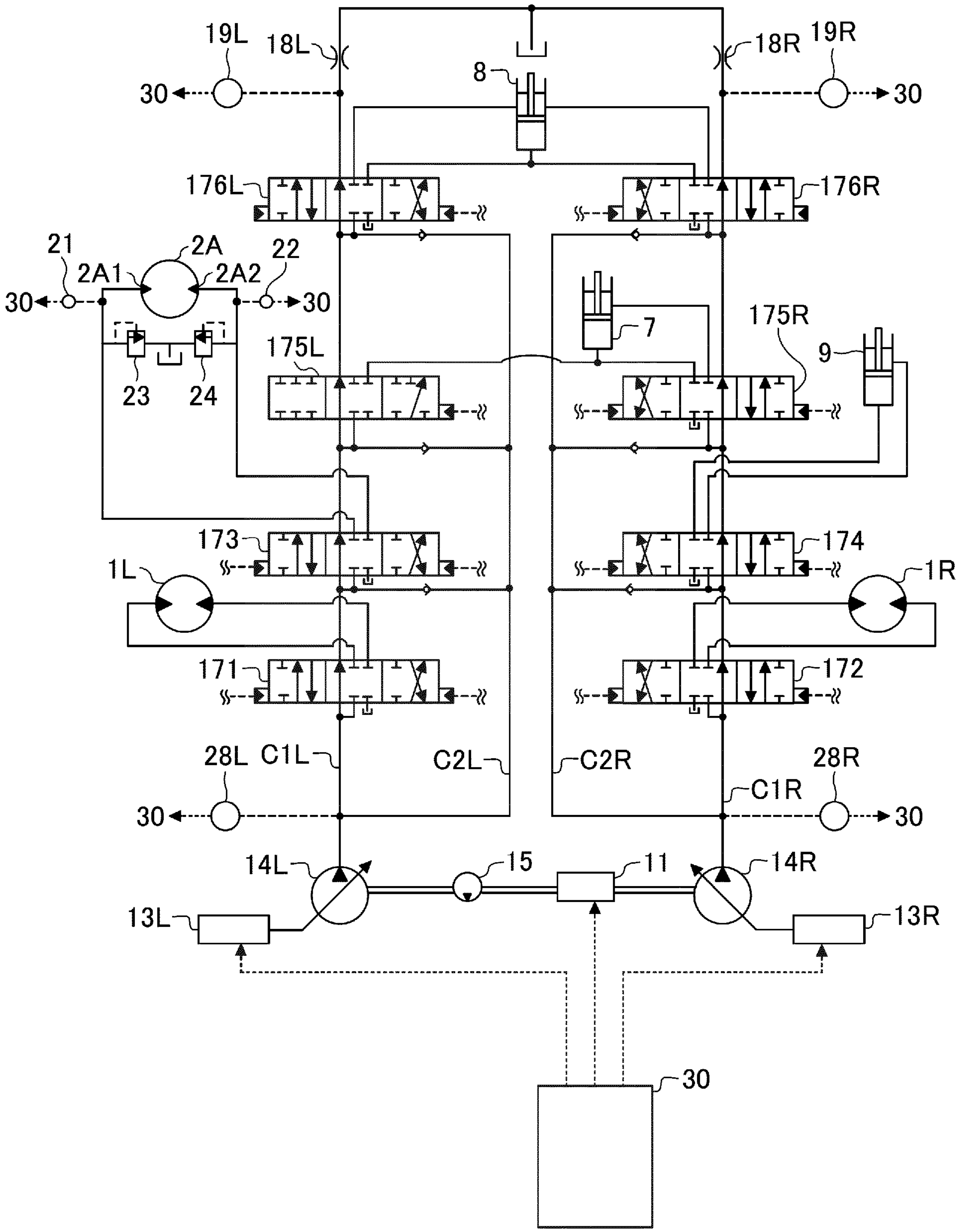
19L
18L
8
18R
19R
30
30
176L
176R
21
2A
22
2A1
2A2
30
30
7
175R
9
175L
23
24
173
174
1L
1R
171
172
28L
C1L
C2L
C2R
28R
C1R
30
30
14L
15
11
14R
13L
13R
30

FIG.4A

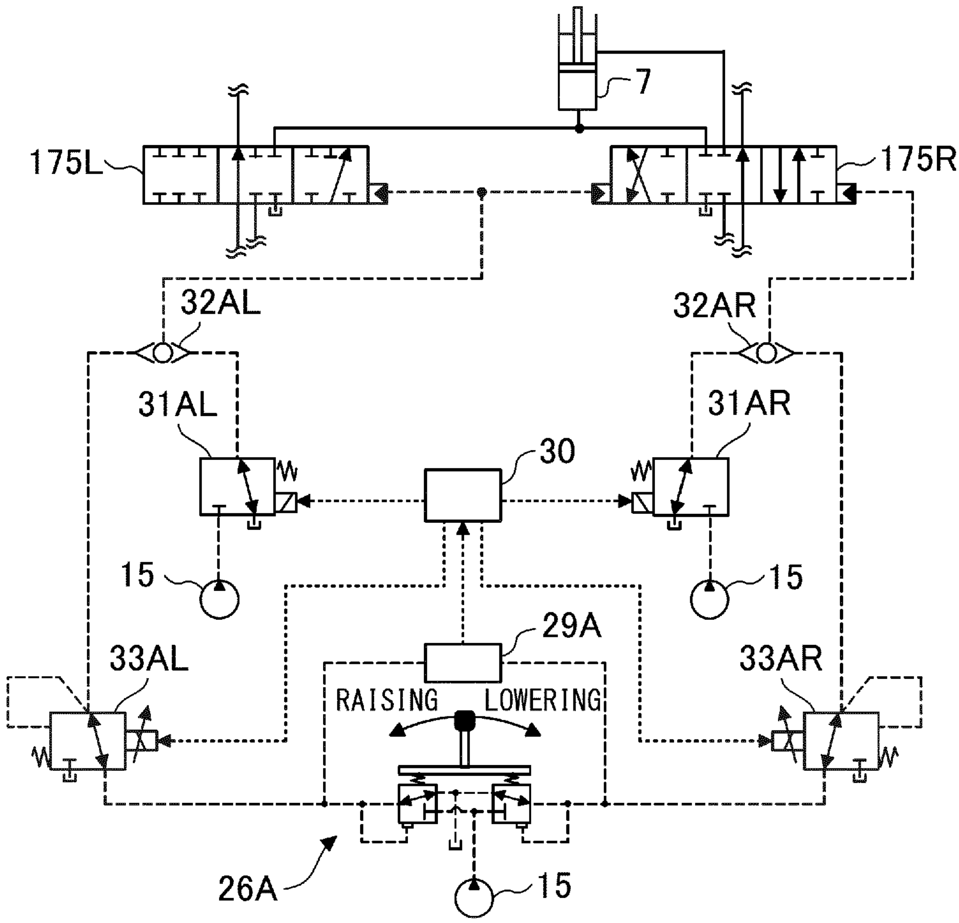
7
175L
175R
32AL
32AR
31AL
31AR
30
15
15
29A
33AL
33AR
RAISING
LOWERING
26A
15

FIG.4B

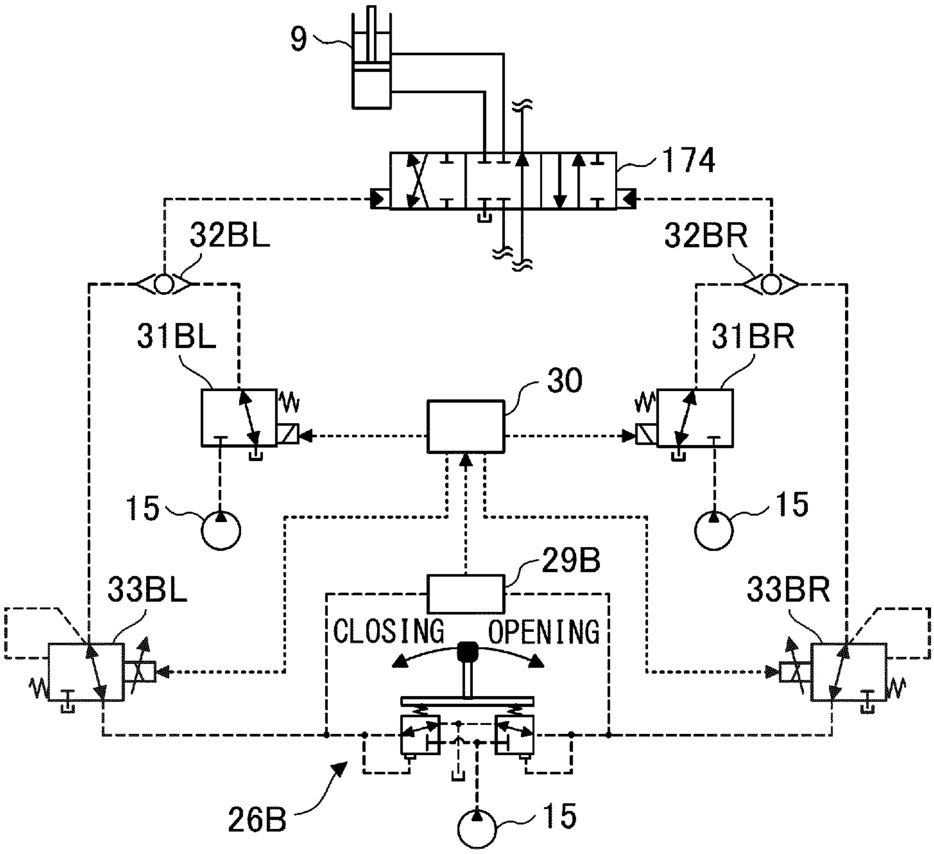
9
174
32BL
32BR
31BL
31BR
30
15
15
29B
33BL
33BR
CLOSING
OPENING
26B
15

FIG.4C

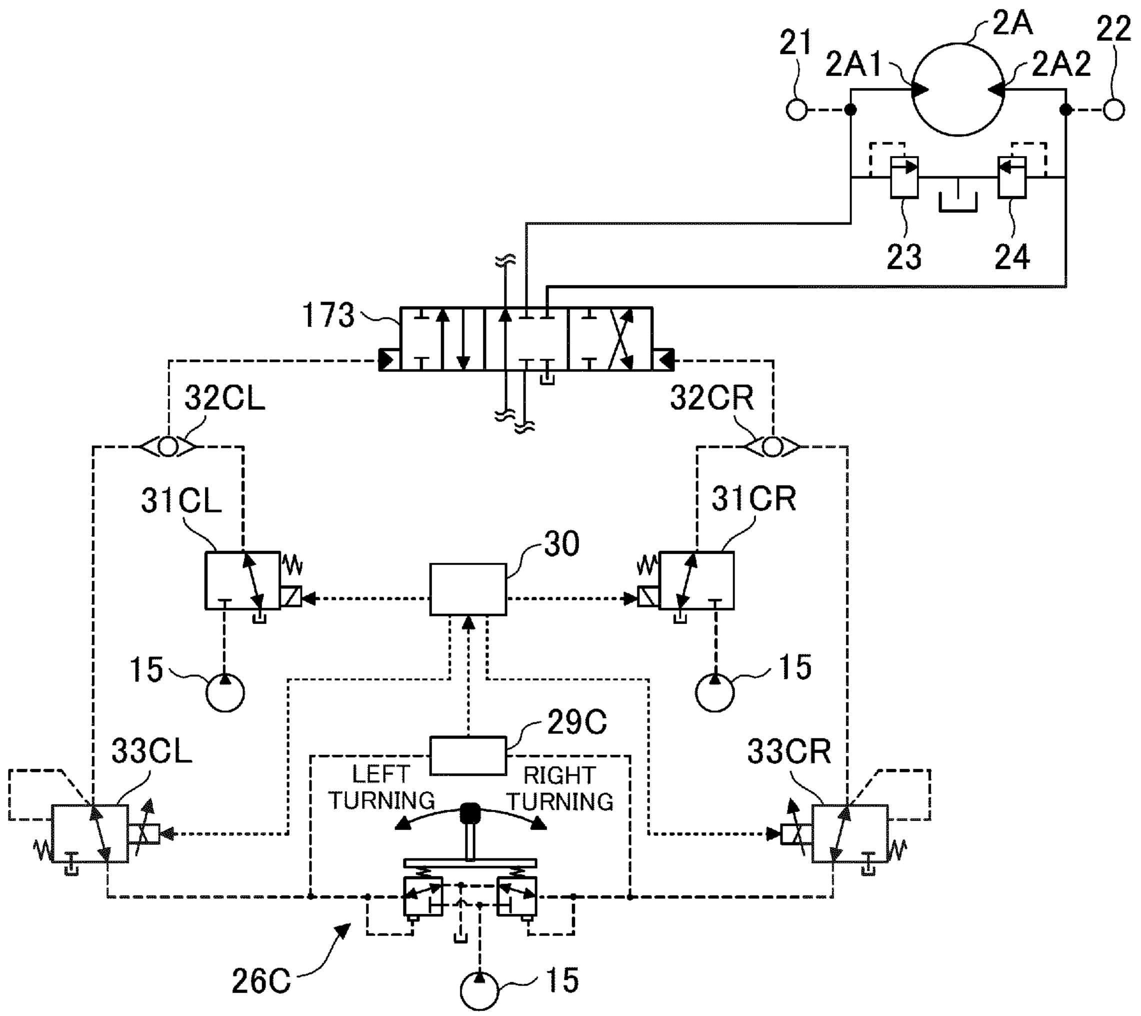
2A
21
2A1
2A2
22
23
24
173
32CL
32CR
31CL
30
31CR
15
15
29C
33CL
LEFT TURNING
RIGHT TURNING
33CR
26C
15

FIG.5

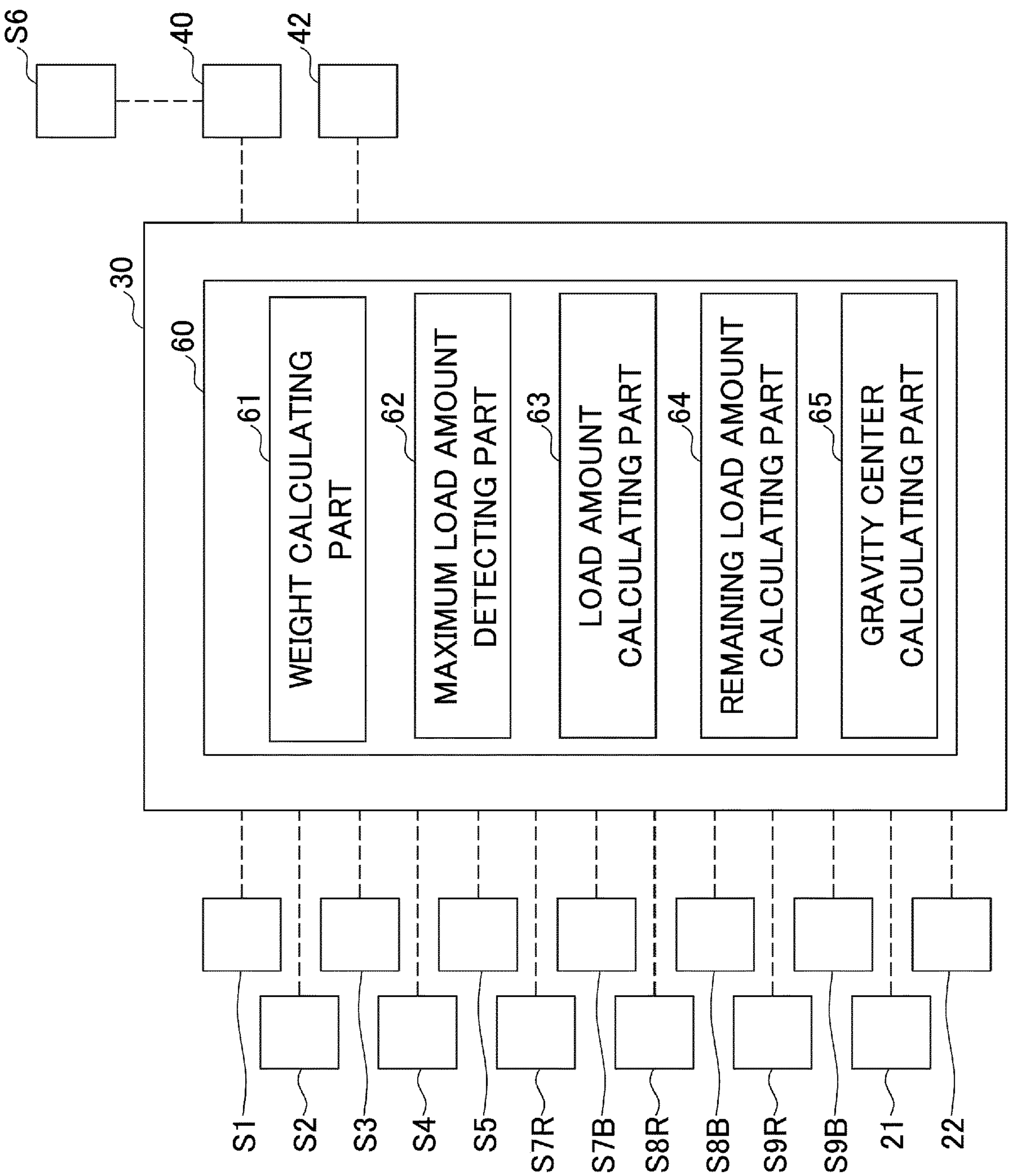
S6
40
42
30
60
61
WEIGHT CALCULATING PART
62
MAXIMUM LOAD AMOUNT DETECTING PART
63
LOAD AMOUNT CALCULATING PART
64
REMAINING LOAD AMOUNT CALCULATING PART
65
GRAVITY CENTER CALCULATING PART
S1
S2
S3
S4
S5
S7R
S7B
S8R
S8B
S9R
S9B
21
22

FIG.6

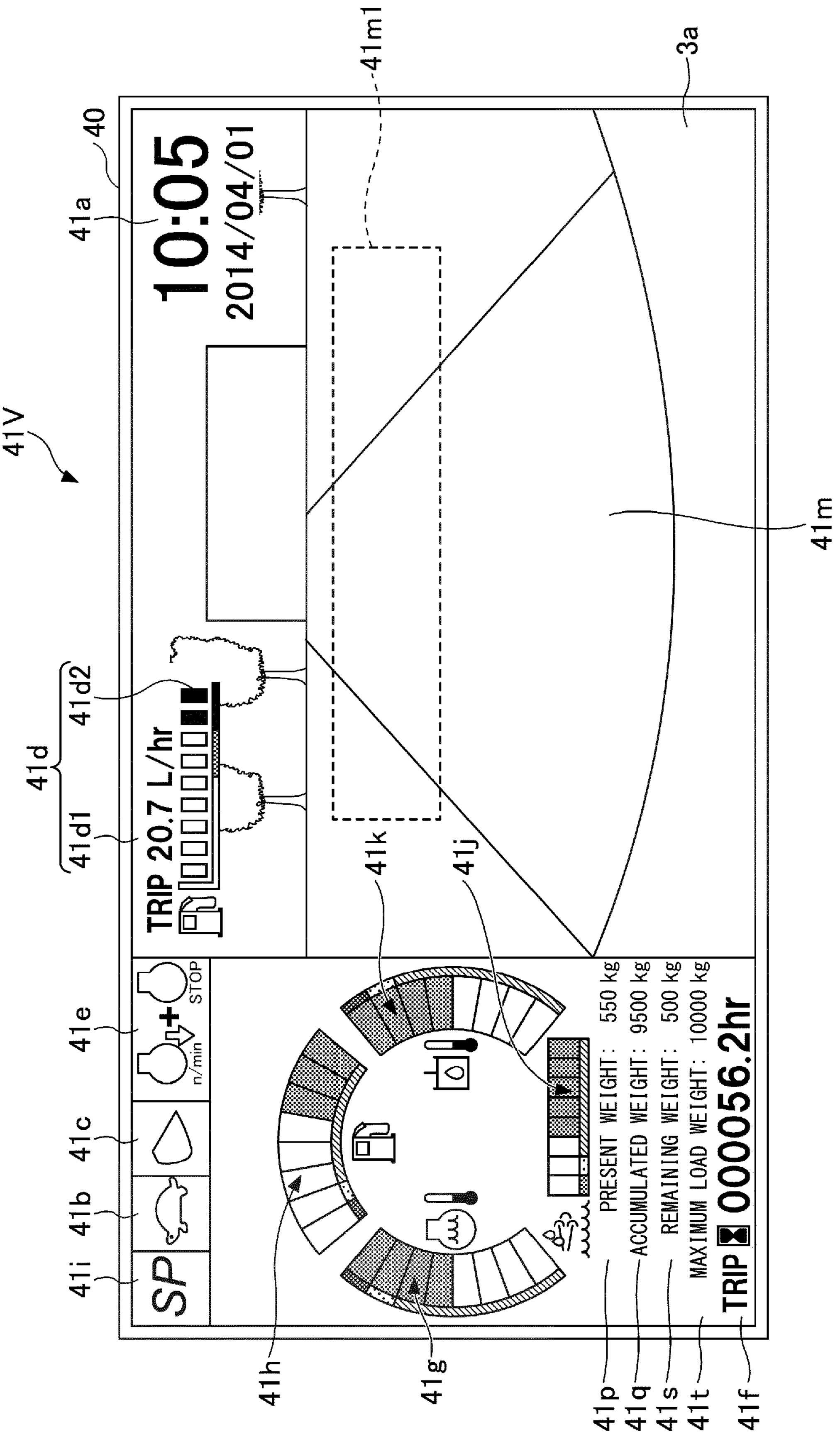
41V
40
41a
41m1
3a
41d
41d1
41d2
41i
41b
41c
41e
41k
41j
41m
41h
41g
41p
41q
41s
41t
41f
10:05
2014/04/01
TRIP 20.7 L/hr
SP
n/min
STOP
PRESENT WEIGHT: 550 kg
ACCUMULATED WEIGHT: 9500 kg
REMAINING WEIGHT: 500 kg
MAXIMUM LOAD WEIGHT: 10000 kg
TRIP 000056.2hr

FIG.7A

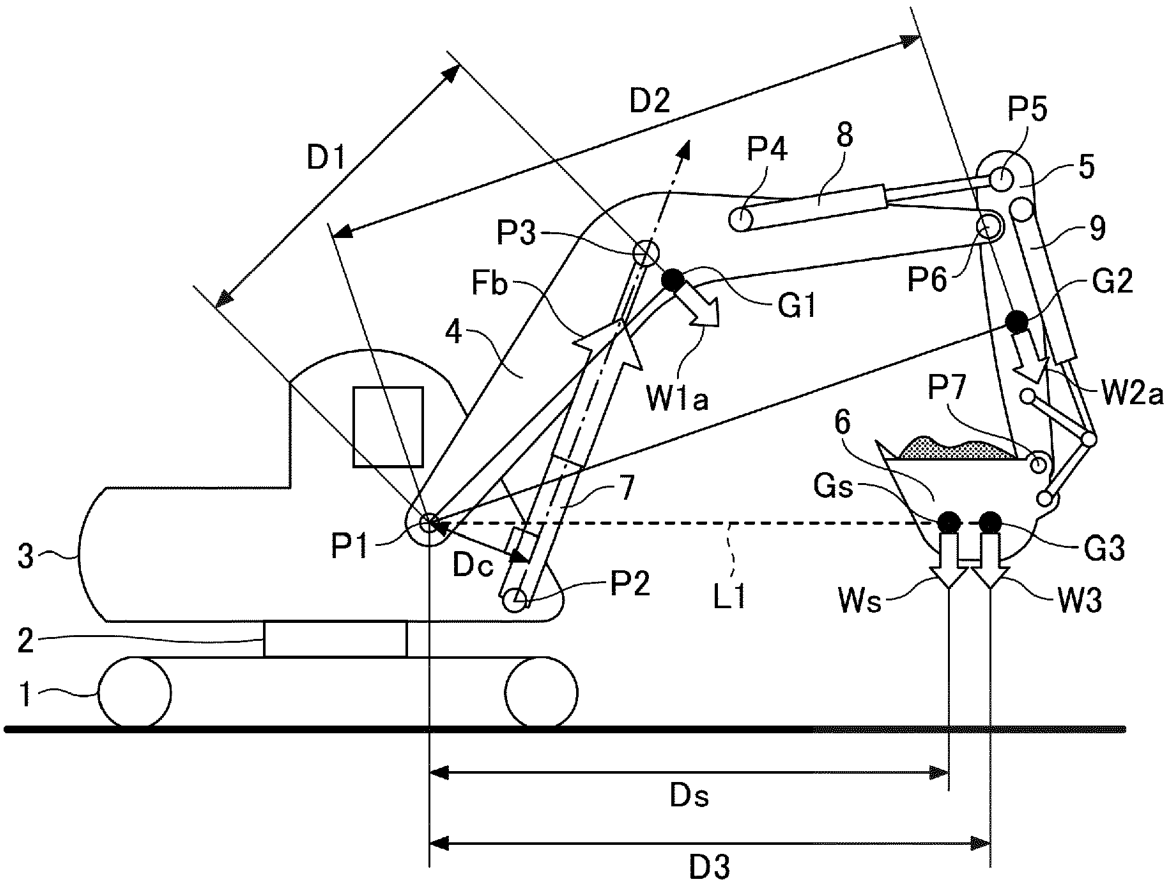
D1
D2
P5
P4
8
5
P3
9
Fb
P6
G1
G2
4
W1a
P7
W2a
6
Gs
7
3
P1
Dc
P2
L1
Ws
G3
W3
2
1
Ds
D3

FIG.7B

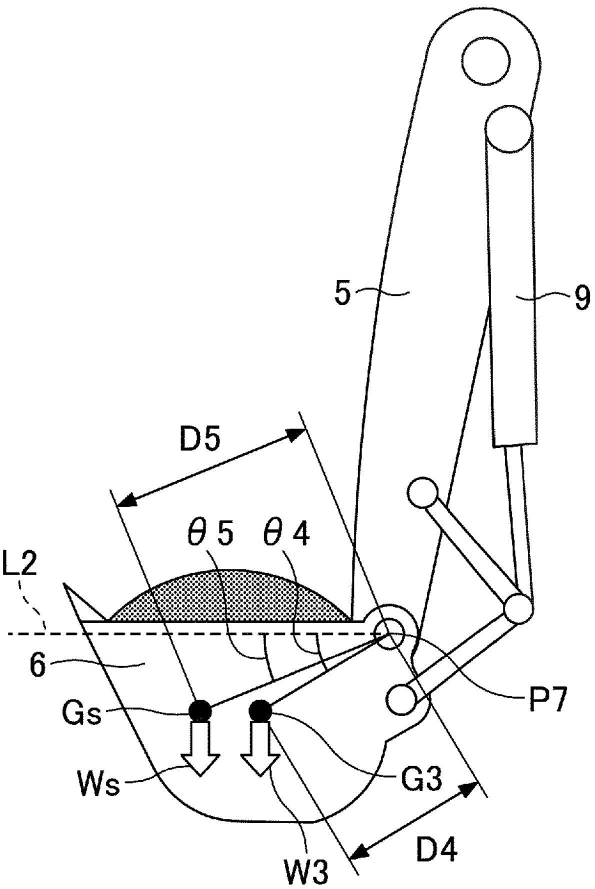

FIG.8

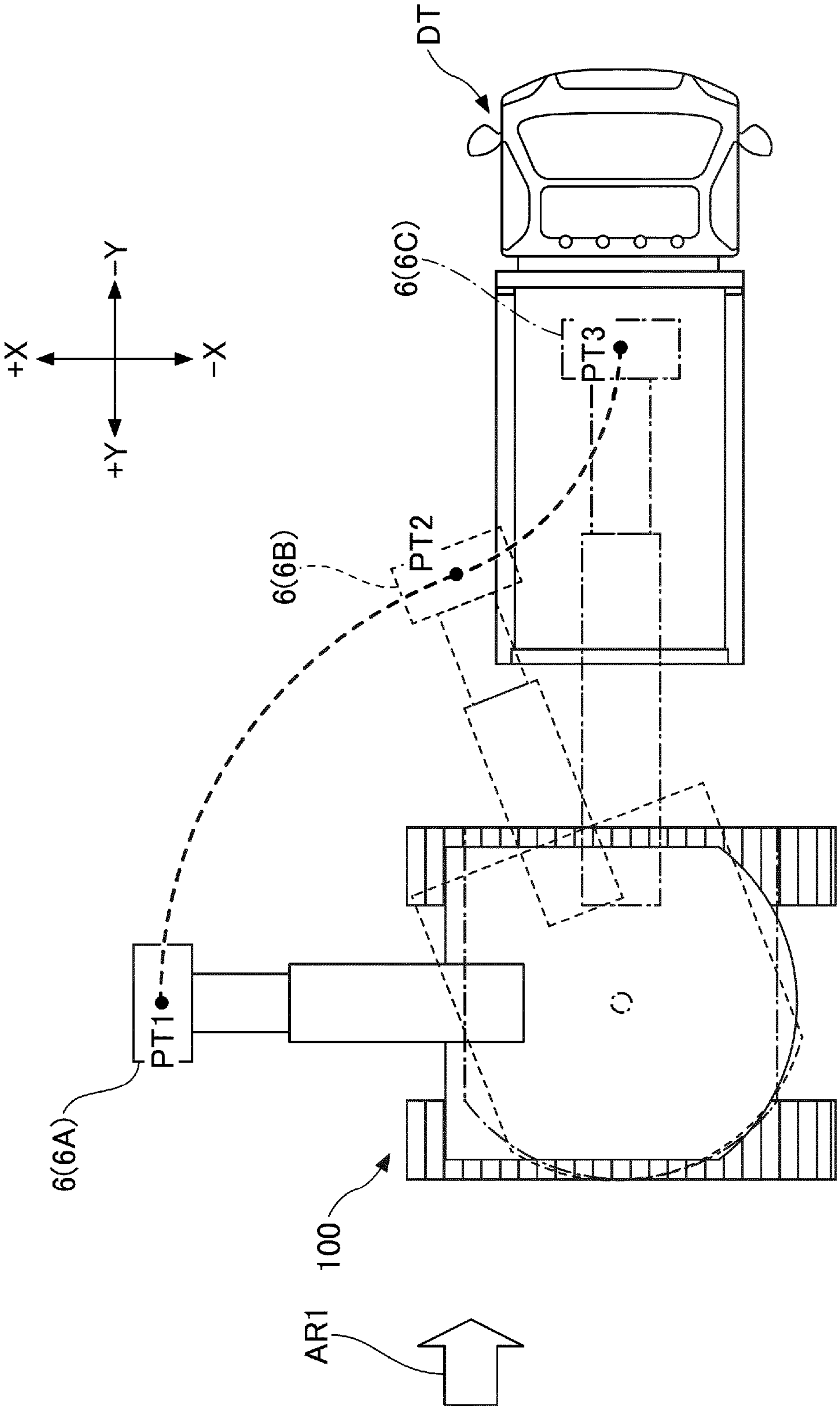

FIG.9

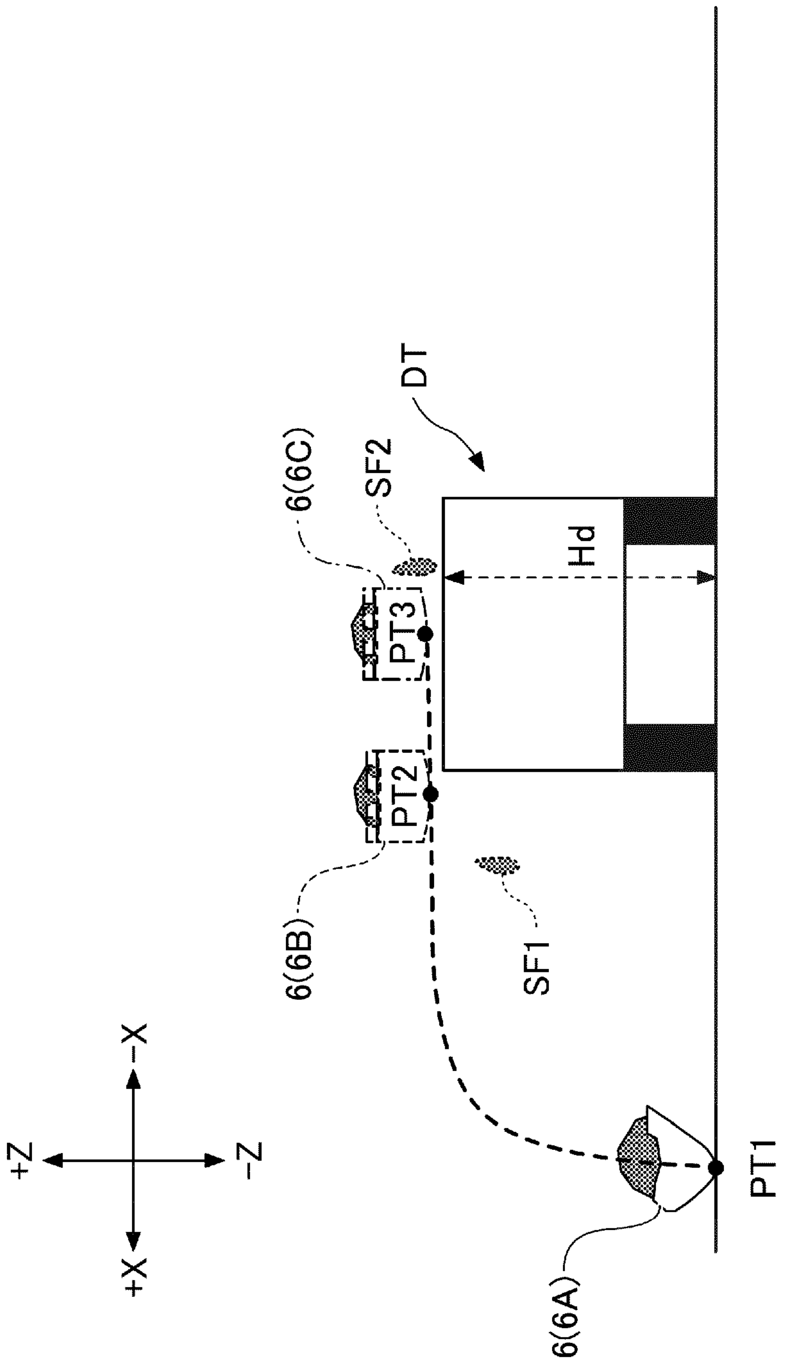

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2019031551 A
- US 2008162004 A1
- JP 2019157362 A
- JP 2020020155 A
- WO 2019189013 A1
- WO 2020101006 A1
- JP 2016089559 A
- JP 2008241300 A
- WO 2019117166 A